# EUROPEAN PATENT APPLICATION

(11) **EP 4 801 115 A1**
(43) Date of publication of application: **02.09.2026**
(21) Application number: 24881529.2
(22) Date of filing: 18.10.2024
(51) Int. Cl.: H04W 48/08

(54) **BEARER ESTABLISHMENT METHOD AND APPARATUS, AND TERMINAL, NETWORK DEVICE AND READABLE STORAGE MEDIUM**

(30) Priority: 25.10.2023 CN 202311393095
(71) Applicant: Vivo Mobile Communication Co., Ltd., Dongguan, Guangdong 523863 (CN)
(72) Inventor: JIN, Hui, Dongguan, Guangdong 523863 (CN)
(74) Representative: Shieldmark
(86) International application number: PCT/CN2024/125879
(87) International publication number: WO 2025/087164

(57) **Abstract**

This application discloses a bearer establishment method and apparatus, a terminal, a network device, and a readable storage medium, pertaining to the field of communication technology. A bearer establishment method according to an embodiment of this application includes: receiving, by a first network device, a first message from a second network device, where the first message is used to establish a bearer for transmitting service data of a first service; and sending, by the first network device, first configuration information to a terminal based on the first message, where the first configuration information is used for at least one of the following: releasing a first DRB between the terminal and the first network device, and establishing a second DRB between the terminal and the first network device; and modifying a configuration parameter corresponding to the first DRB between the terminal and the first network device; where the first DRB is used to transmit service data of a second service, the second DRB is used to transmit the service data of the first service, and the first DRB with the configuration parameter modified is usable to transmit the service data of the first service.

## Description

This application claims priority to Chinese Patent Application No. 202311393095.3, filed with the China National Intellectual Property Administration on October 25, 2023 and entitled "BEARER ESTABLISHMENT METHOD AND APPARATUS, TERMINAL, NETWORK DEVICE, AND READABLE STORAGE MEDIUM", which is incorporated herein by reference in its entirety.

### TECHNICAL FIELD

This application pertains to the field of communication technology, and specifically relates to a bearer establishment method and apparatus, a terminal, a network device, and a readable storage medium.

### BACKGROUND

Currently, when a terminal performs communication service with another device, the terminal may first establish a connection channel for transmitting service data of the communication service, where the connection channel includes a data radio bearer (Data Radio Bearer, DRB) between the terminal and an access network device, and a bearer between the access network device and a core network. Then the terminal transmits the service data of the communication service with the another device through the DRB and the bearer to communicate with the another device.

However, since the number of DRBs that can be established between the terminal and the access network device is limited, a situation may arise where the terminal cannot establish the DRB because the number of DRBs already established between the terminal and the access network device reaches the upper limit. Consequently, the terminal may be unable to perform communication service with the another device. Alternatively, since resources between the access network device and the core network are limited, a situation may arise where resource insufficiency results in a relatively low rate for transmitting service data of the communication service with the another device through the bearer, leading to a relatively low efficiency of communication service between the terminal and the another device. As a result, the quality of communication between the terminal and the another device is degraded.

### SUMMARY

Embodiments of this application provide a bearer establishment method and apparatus, a terminal, a network device, and a readable storage medium, to solve the problem of poor communication quality between a terminal and another device.

According to a first aspect, a bearer establishment method is provided, executed by a first network device. The method includes: receiving, by the first network device, a first message from a second network device, where the first message is used to establish a bearer for transmitting service data of a first service; and sending, by the first network device, first configuration information to a terminal based on the first message, where the first configuration information is used for at least one of the following: releasing a first DRB between the terminal and the first network device, and establishing a second DRB between the terminal and the first network device; and modifying a configuration parameter corresponding to the first DRB between the terminal and the first network device; where the first DRB is used to transmit service data of a second service, the second DRB is used to transmit the service data of the first service, and the first DRB with the configuration parameter modified is usable to transmit the service data of the first service.

According to a second aspect, a bearer establishment method is provided, executed by a second network device. The method includes: sending, by the second network device, a first message to a first network device, where the first message is used to establish a bearer for transmitting service data of a first service; and sending, by the second network device, an eighth message to a third network device, or sending, by the second network device, a ninth message to a fourth network device; where the eighth message is used for any one of the following: releasing a resource corresponding to a first connection channel; and deleting a first connection channel; the first connection channel is used to transmit service data of a second service; and the ninth message is used to indicate that the first connection channel is unable to transmit the service data of the second service, and the first connection channel is used to transmit the service data of the second service.

According to a third aspect, a bearer establishment method is provided, executed by a terminal. The method includes: receiving, by the terminal, first configuration information from a first network device; and performing, by the terminal based on the first configuration information, at least one of the following: releasing a first DRB between the terminal and the first network device, and establishing a second DRB between the terminal and the first network device; and modifying a configuration parameter corresponding to the first DRB between the terminal and the first network device; where the first DRB is used to transmit service data of a second service, the second DRB is used to transmit service data of a first service, and the first DRB with the configuration parameter modified is usable to transmit the service data of the first service.

According to a fourth aspect, a bearer establishment apparatus is provided, where the bearer establishment apparatus is a first bearer establishment apparatus, and the first bearer establishment apparatus includes: a receiving module and a sending module. The receiving module is configured to receive a first message from a second bearer establishment apparatus, where the first message is used to establish a bearer for transmitting service data of a first service. The sending module is configured to send first configuration information to a fourth bearer establishment apparatus based on the first message received by the receiving module, where the first configuration information is used for at least one of the following: releasing a first DRB between the first bearer establishment apparatus and the fourth bearer establishment apparatus, and establishing a second DRB between the first bearer establishment apparatus and the fourth bearer establishment apparatus; and modifying a configuration parameter corresponding to the first DRB between the first bearer establishment apparatus and the fourth bearer establishment apparatus; where the first DRB is used to transmit service data of a second service, the second DRB is used to transmit the service data of the first service, and the first DRB with the configuration parameter modified is usable to transmit the service data of the first service.

According to a fifth aspect, a bearer establishment apparatus is provided, where the bearer establishment apparatus is a second bearer establishment apparatus, and the second bearer establishment apparatus includes: a sending module. The sending module is configured to send a first message to a first bearer establishment apparatus, where the first message is used to establish a bearer for transmitting service data of a first service; and send an eighth message to a third bearer establishment apparatus, or send a ninth message to a fifth bearer establishment apparatus; where the eighth message is used for any one of the following: releasing a resource corresponding to a first connection channel; and deleting a first connection channel; the first connection channel is used to transmit service data of a second service; and the ninth message is used to indicate that the first connection channel is unable to transmit the service data of the second service, and the first connection channel is used to transmit the service data of the second service.

According to a sixth aspect, a bearer establishment apparatus is provided, where the bearer establishment apparatus is a fourth bearer establishment apparatus, and the fourth bearer establishment apparatus includes: a receiving module and an execution module. The receiving module is configured to receive first configuration information from a first bearer establishment apparatus. The execution module is configured to perform, based on the first configuration information received by the receiving module, at least one of the following: releasing a first DRB between the first bearer establishment apparatus and the fourth bearer establishment apparatus, and establishing a second DRB between the first bearer establishment apparatus and the fourth bearer establishment apparatus; and modifying a configuration parameter corresponding to the first DRB between the first bearer establishment apparatus and the fourth bearer establishment apparatus; where the first DRB is used to transmit service data of a second service, the second DRB is used to transmit service data of a first service, and the first DRB with the configuration parameter modified is usable to transmit the service data of the first service.

According to a seventh aspect, a network device is provided. The network device includes a processor and a memory, where the memory stores a program or instructions capable of running on the processor, and the program or instructions, when executed by the processor, implement the steps of the method according to the first aspect, or implement the steps of the method according to the second aspect.

According to an eighth aspect, a network device is provided, including a processor and a communication interface, where the communication interface is configured to receive a first message from a second network device, where the first message is used to establish a bearer for transmitting service data of a first service; and send first configuration information to a terminal based on the first message, where the first configuration information is used for at least one of the following: releasing a first DRB between the terminal and the first network device, and establishing a second DRB between the terminal and the first network device; and modifying a configuration parameter corresponding to the first DRB between the terminal and the first network device; where the first DRB is used to transmit service data of a second service, the second DRB is used to transmit the service data of the first service, and the first DRB with the configuration parameter modified is usable to transmit the service data of the first service; or the communication interface is configured to send a first message to a first network device, where the first message is used to establish a bearer for transmitting service data of a first service; and send an eighth message to a third network device, or send a ninth message to a fourth network device; where the eighth message is used for any one of the following: releasing a resource corresponding to a first connection channel; and deleting a first connection channel; the first connection channel is used to transmit the service data of a second service; and the ninth message is used to indicate that the first connection channel is unable to transmit the service data of the second service, and the first connection channel is used to transmit the service data of the second service.

According to a ninth aspect, a terminal is provided. The terminal includes a processor and a memory, where the memory stores a program or instructions capable of running on the processor, and the program or instructions, when executed by the processor, implement the steps of the method according to the third aspect.

According to a tenth aspect, a terminal is provided, including a processor and a communication interface, where the communication interface is configured to receive first configuration information from a first network device; and the processor is configured to perform, based on the first configuration information, at least one of the following: releasing a first DRB between the terminal and the first network device, and establishing a second DRB between the terminal and the first network device; and modifying a configuration parameter corresponding to the first DRB between the terminal and the first network device; where the first DRB is used to transmit service data of a second service, the second DRB is used to transmit service data of a first service, and the first DRB with the configuration parameter modified is usable to transmit the service data of the first service.

According to an eleventh aspect, a readable storage medium is provided. The readable storage medium stores a program or instructions, and the program or instructions, when executed by a processor, implement the steps of the method according to the first aspect, or implement the steps of the method according to the second aspect, or implement the steps of the method according to the third aspect.

According to a twelfth aspect, a wireless communication system is provided, including: a terminal and a network device, where the terminal may be configured to perform the steps of the method according to the third aspect; and the network device may be configured to perform the steps of the method according to the first aspect, or perform the steps of the method according to the second aspect.

According to a thirteenth aspect, a chip is provided. The chip includes a processor and a communication interface, where the communication interface is coupled to the processor, and the processor is configured to run a program or instructions to implement the steps of the method according to the first aspect, or implement the steps of the method according to the second aspect, or implement the steps of the method according to the third aspect.

According to a fourteenth aspect, a computer program/program product is provided, where the computer program/program product is stored in a storage medium, and the program/program product is executed by at least one processor to implement the steps of the method according to the first aspect, or implement the steps of the method according to the second aspect, or implement the steps of the method according to the third aspect.

In the embodiments of this application, when the second network device indicates the first network device to establish a bearer for transmitting service data of a first service, the first network device may send first configuration information to the terminal, so that the terminal can release a first DRB already established between the terminal and the first network device, and establish a second DRB. That is, the terminal can first reduce the number of DRBs already established between the terminal and the first network device, and then establish the second DRB. In other words, the terminal can establish the second DRB while ensuring that the number of DRBs already established between the terminal and the first network device does not reach the upper limit, instead of directly establishing a new DRB for transmitting the service data of the first service. Therefore, it is possible to avoid a situation where the terminal cannot establish the second DRB anymore due to the number of DRBs already established between the terminal and the first network device having reached the upper limit. And/or, the terminal, upon receiving the first configuration information, can modify a configuration parameter corresponding to the first DRB already established between the terminal and the first network device to obtain a DRB for transmitting the service data of the first service. That is, instead of directly establishing a new DRB for transmitting the service data of the first service, the terminal can obtain, through modification, a DRB for transmitting the service data of the first service, without increasing the number of DRBs already established between the terminal and the first network device. Therefore, it is possible to avoid a situation where the terminal cannot establish the second DRB anymore due to the number of DRBs already established between the terminal and the first network device having reached the upper limit. This can reduce the probability that the terminal is unable to perform communication services with other devices, thereby improving the quality of communication between the terminal and other devices.

In the embodiments of this application, since the second network device indicates the first network device to establish a bearer for transmitting service data of a first service, a situation may arise where a first connection channel cannot transmit service data of a second service. In this case, the second network device may notify the third network device to release a resource corresponding to the first connection channel or delete the first connection channel, to prevent other network devices from using resources to transmit information through the first connection channel. Therefore, resources occupied for transmitting information through the first connection channel can be saved, to reduce the probability of a low rate for transmitting the service data of the first service with other devices caused by resource insufficiency. Alternatively, the second network device may notify the fourth network device that the first connection channel is unable to transmit the service data of the second service, so the fourth network device can transmit information through the first connection channel without using resources. Therefore, resources occupied for transmitting information through the first connection channel can be saved, to reduce the probability of a low rate for transmitting the service data of the first service with other devices caused by resource insufficiency. This can improve the efficiency of the terminal in performing the first service with other devices, thereby improving the quality of communication between the terminal and other devices.

In the embodiments of this application, the terminal, upon receiving the first configuration information, can release the first DRB already established between the terminal and the first network device, and establish a second DRB. That is, the terminal can first reduce the number of DRBs already established between the terminal and the first network device, and then establish the second DRB. In other words, the terminal can establish the second DRB while ensuring that the number of DRBs already established between the terminal and the first network device does not reach the upper limit, instead of directly establishing a new DRB for transmitting the service data of the first service. Therefore, it is possible to avoid a situation where the terminal cannot establish the second DRB anymore due to the number of DRBs already established between the terminal and the first network device having reached the upper limit. And/or, the terminal, upon receiving the first configuration information, can modify a configuration parameter corresponding to the first DRB already established between the terminal and the first network device to obtain a DRB for transmitting the service data of the first service. That is, instead of directly establishing a new DRB for transmitting the service data of the first service, the terminal can obtain, through modification, a DRB for transmitting the service data of the first service, without increasing the number of DRBs already established between the terminal and the first network device. Therefore, it is possible to avoid a situation where the terminal cannot establish the second DRB anymore due to the number of DRBs already established between the terminal and the first network device having reached the upper limit. This can reduce the probability that the terminal is unable to perform communication services with other devices, thereby improving the quality of communication between the terminal and other devices.

### BRIEF DESCRIPTION OF DRAWINGS

FIG. 1 is a schematic flowchart of a terminal initiating a voice call to other devices in the related art;
FIG. 2 is a schematic diagram of components of an EPS bearer in the related art;
FIG. 3 is a block diagram of a wireless communication system according to an embodiment of this application;
FIG. 4 is a first schematic flowchart of a bearer establishment method according to an embodiment of this application;
FIG. 5 is a second schematic flowchart of a bearer establishment method according to an embodiment of this application;
FIG. 6 is a third schematic flowchart of a bearer establishment method according to an embodiment of this application;
FIG. 7 is a fourth schematic flowchart of a bearer establishment method according to an embodiment of this application;
FIG. 8 is a fifth schematic flowchart of a bearer establishment method according to an embodiment of this application;
FIG. 9 is a sixth schematic flowchart of a bearer establishment method according to an embodiment of this application;
FIG. 10 is a seventh schematic flowchart of a bearer establishment method according to an embodiment of this application;
FIG. 11 is a first schematic flowchart of a terminal initiating a voice call to other devices in a bearer establishment method according to an embodiment of this application;
FIG. 12 is a second schematic flowchart of a terminal initiating a voice call to other devices in a bearer establishment method according to an embodiment of this application;
FIG. 13 is a third schematic flowchart of a terminal initiating a voice call to other devices in a bearer establishment method according to an embodiment of this application;
FIG. 14 is a fourth schematic flowchart of a terminal initiating a voice call to other devices in a bearer establishment method according to an embodiment of this application;
FIG. 15 is a schematic structural diagram of a first bearer establishment apparatus according to an embodiment of this application;
FIG. 16 is a schematic structural diagram of a second bearer establishment apparatus according to an embodiment of this application;
FIG. 17 is a schematic structural diagram of a fourth bearer establishment apparatus according to an embodiment of this application;
FIG. 18 is a schematic diagram of a hardware structure of a communication device according to an embodiment of this application;
FIG. 19 is a schematic diagram of hardware reception of a terminal according to an embodiment of this application;
FIG. 20 is a first schematic diagram of a hardware structure of a network device according to an embodiment of this application; and
FIG. 21 is a second schematic diagram of a hardware structure of a network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The following describes the terms involved in the embodiments of this application.

### 1. Terminal performs a voice call procedure

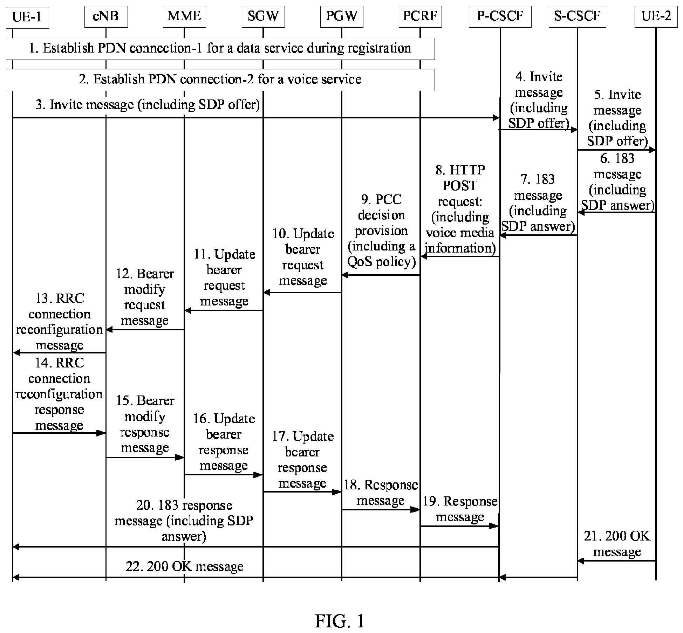

Typically, a terminal may initiate a voice call to other devices through a wireless network. Taking the wireless network being a fourth generation mobile communication technology (4th-Generation, 4G) network as an example, the specific flow is shown in FIG. 1.
(1) The terminal (for example, user equipment (User Equipment, UE)-1) may first register to the 4G network and establish a packet data network (Packet Data Network, PDN) connection-1 for transmitting a data service.
(2) Then UE-1 establishes a PDN connection-2 for transmitting a voice service, so that UE-1 can communicate with other devices (for example, UE-2) through the PDN connection-1 and/or the PDN connection-2.
(3) When UE-1 initiates a voice call to UE-2, through an invite message, UE-1 may send the Invite message to a proxy-call session control function (Proxy-Call Session Control Function, P-CSCF) network element, to initiate a call request to UE-2, where a session description protocol (Session Description Protocol, SDP) request offer in the Invite message carries information of voice media to be established.
(4) After receiving the Invite message, the P-CSCF network element sends the Invite message to a serving call session control function (Serving Call Session Control Function, S-CSCF) network element.
(5) The S-CSCF network element may send the Invite message to UE-2.
(6) UE-2 may return a response message to the S-CSCF network element, where an SDP answer is carried in the response message, and the SDP answer is used to negotiate the information of voice media to be established.
(7) The S-CSCF network element may send the response message to the P-CSCF network element.
(8) The P-CSCF network element may send information of the negotiated voice media carried in the SDP answer to a policy and charging rules function (Policy and Charging Rules Function, PCRF) network element, where the information of the negotiated voice media is obtained based on the SDP answer.
(9) The PCRF network element may send a determined quality of service (Quality of Service, QoS) policy to a packet data network gateway (Packet Data Network Gateway, PGW).
(10) The PGW may send an update bearer (Update Bearer) request message to a serving gateway (Serving GateWay, SGW), where the update bearer request message is used to establish a dedicated voice bearer.
(11) The SGW may send the update bearer request message to a mobility management entity (Mobility Management Entity, MME) network element for establishing a dedicated voice bearer.
(12) The MME network element may send a bearer modify request message to a base station, where the bearer modify request message includes a QoS parameter corresponding to the dedicated voice bearer and an evolved packet system bearer identity (Evolved Packet System Bearer ID, EBI).
(13) The base station may send a radio resource control (Radio Resource Control, RRC) connection reconfiguration message to UE-1, where the RRC connection reconfiguration message contains SRB-ToAddMod information, and the SRB-ToAddMod information is used to establish a DRB corresponding to the dedicated voice bearer.
(14) UE-1 may establish a DRB between UE-1 and the base station, and reply with an RRC connection reconfiguration response message.
(15) The base station may send a bearer modify response message to the MME network element.
(16) The MME network element may send an update bearer response message to the SGW.
(17) The SGW may send the update bearer response message to the PGW.
(18) The PGW may send a response message to the PCRF network element, to notify the PCRF network element that the policy sent by the PCRF network element has been executed.
(19) The PCRF network element may send a response message to the P-CSCF network element, to indicate whether the dedicated voice bearer is successfully established.
(20) If the dedicated voice bearer is successfully established, the P-CSCF network element may send a 183 response message to UE-1; otherwise, the P-CSCF network element may send a cancel message to UE-2 to end the call.
(21) When a user of UE-2 answers the incoming call, UE-2 may send a 200 OK message to the S-CSCF network element.
(22) The 200 OK message is routed to UE-1, UE-1 determines, based on the 200 OK message, that the user of UE-2 answers the incoming call, and the call starts.

### 2. PDN connection

Typically, a PDN connection refers to an internet protocol (Internet Protocol, IP) connection between a terminal and a 4G network. Each PDN connection has at least one default evolved packet system (Evolved Packet System, EPS) bearer, and optionally, each PDN connection may also have a dedicated Dedicated EPS bearer.

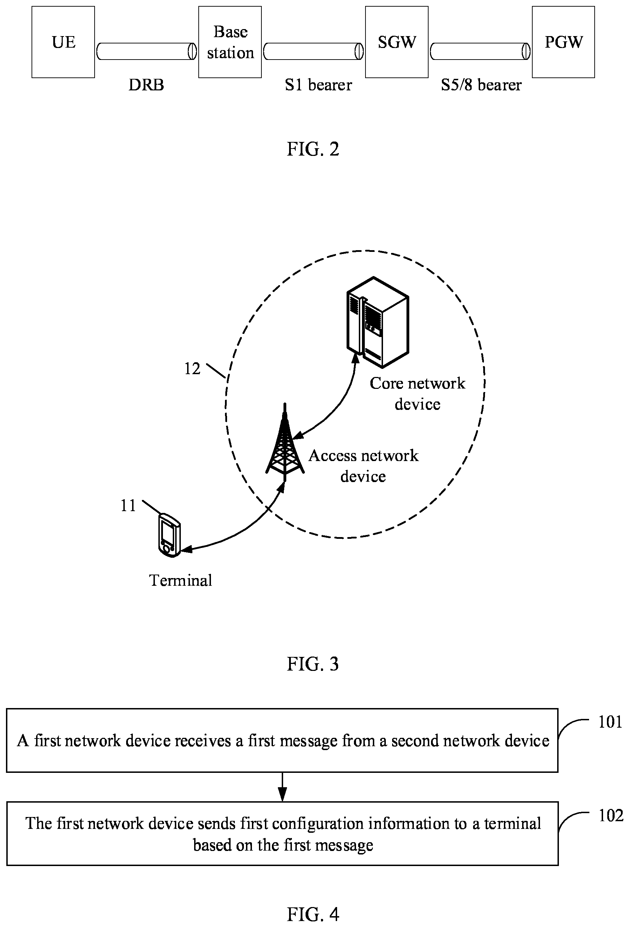

Each EPS bearer consists of two parts, as shown in FIG. 2. One part is a DRB between a terminal (for example, UE) and a base station; and the other part is a connection between the base station and a core network, including: an S1 bearer between the base station and an SGW, and an S5/S8 bearer between the SGW and a PGW.

### 3. Protocol data unit (Protocol Data Unit, PDU) session

Typically, a PDU session is an IP connection between a terminal and a fifth generation mobile communication technology (5th-Generation, 5G) network. A PDU session is the concept corresponding to a PDN connection in 5G. A QoS flow is the concept corresponding to an EPS bearer in 5G.

Each QoS flow consists of two parts. One part is a DRB between a terminal and a base station; and the other part is a connection between the base station and a core network, including: an N2 connection between the base station and a user plane function (User Plane Function, UPF) network element.

### 4. Number of connection channels that can be established between a terminal and a network device

Typically, the number of connection channels that can be established between a terminal and a network device (for example, an access network device (base station)) is limited.

In a 4G network, in a narrow band Internet of Things (Narrow Band Internet of Things, NB-IOT) scenario, the number of connection channels that can be established between a terminal and a base station is typically 2, that is, the number of DRBs that can be established between the terminal and the base station is 2, and the number of S1 bearers and S5/S8 bearers between the base station and a core network is 2. In a non-NB-IOT scenario, the number of connection channels that can be established between a terminal and a base station is typically 8, that is, the number of DRBs that can be established between the terminal and the base station is 8, and the number of S1 bearers and S5/S8 bearers between the base station and a core network is 8.

### 5. Other terms

The terms "first", "second", and the like in this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication. An indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other systems than an NR system, for example, the 6th generation (6^{th} Generation, 6G) communication system.

FIG. 3 is a block diagram of a wireless communication system to which embodiments of this application is applicable. The wireless communication system includes a terminal 11 and a network device 12. The terminal 11 may be a terminal-side device such as a mobile phone, a tablet personal computers (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, smart earphones, smart glasses, smart jewelry (a smart bracelet, a smart band, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, or the like. In addition to the above terminal devices, the terminal 11 may also be a chip within a terminal, such as a modem (Modem) chip or a system on chip (System on Chip, SoC). It should be noted that the terminal 11 is not limited to a specific type in the embodiments of this application. The network device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example for description, but the specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a Home Subscriber Server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is used as an example for description, but the specific type of the core network device is not limited.

The following describes in detail a bearer establishment method and apparatus, a terminal, a network device, and a readable storage medium according to the embodiments of this application through some embodiments and application scenarios thereof with reference to the accompanying drawings.

The bearer establishment method according to an embodiment of this application may be executed by a first bearer establishment apparatus, or a first network device, or a functional module or entity in the first network device. In the embodiments of this application, the bearer establishment method being executed by the first network device is used as an example to illustrate the bearer establishment method according to the embodiments of this application.

FIG. 4 is a schematic flowchart of a bearer establishment method according to an embodiment of this application. As shown in FIG. 4, the bearer establishment method according to the embodiment of this application may include the following step 101 and step 102.

Step 101: The first network device receives a first message from a second network device.

In some embodiments of this application, the first network device is an access network device, and the second network device is a core-network network element such as an MME network element or an AMF network element.

In a case that the second network device is a network device in a 4G network, the second network device may specifically be an MME network element; or in a case that the second network device is a network device in a 5G network, the second network device may specifically be an AMF network element; or in a case that the second network device is a network device in a sixth generation mobile communication technology (6th-Generation, 6G) 6G network, the second network device is a network element that communicates with a base station.

In the embodiment of this application, the first message is used to establish a bearer for transmitting service data of a first service.

In the embodiment of this application, the first message may trigger the first network device to send first configuration information to a terminal.

In some embodiments of this application, in a case that the terminal is connected to the first network device, when the terminal initiates a voice call to another terminal, the terminal may send an Invite message to a P-CSCF network element and trigger a voice call procedure, so that the first network device can receive the first message from the second network device.

Optionally, in a case that the terminal is connected to the first network device, when the terminal receives a voice call initiated by another terminal, the terminal may send a response message to the P-CSCF network element, so that the first network device can receive the first message from the second network device.

Optionally, the first message may specifically be a bearer modify (Bearer Modify) request message. The bearer modify request message may include a QoS parameter and an EBI corresponding to a dedicated voice bearer.

It can be understood that after the terminal sends an Invite message to the P-CSCF network element, steps 4 to 12 in FIG. 1 may be performed, so that the first network device can receive the bearer modify request message, that is, the first message, from the second network device.

Step 102: The first network device sends first configuration information to a terminal based on the first message.

It should be noted that the "first network device sending first configuration information to a terminal based on the first message" may be understood as follows: the first network device first receives the first message, and then sends the first configuration information to the terminal; or the first network device may send the first configuration information to the terminal based on information in the first message.

In the embodiment of this application, the first configuration information is used for at least one of the following:
releasing a first DRB between the terminal and the first network device, and establishing a second DRB between the terminal and the first network device; and
modifying a configuration parameter corresponding to the first DRB between the terminal and the first network device.

In the embodiment of this application, the first DRB is used to transmit service data of a second service, and the second DRB is used to transmit the service data of the first service.

In some embodiments of this application, the first DRB may specifically be a dedicated DRB for transmitting data of a voice service.

In some embodiments of this application, the first service may be the same as or different from the second service.

For example, assuming that the first service is a voice service, the second service may be a voice service, that is, the first service is the same as the second service; or the second service may be a data service, that is, the first service is different from the second service.

Optionally, the first service is a voice service, and the second service is a data service.

In some embodiments of this application, the first configuration information may include a first EBI and a first QoS parameter, where the first EBI is used for the terminal to determine or identify the first DRB, and the first QoS parameter is used for the terminal to establish the second DRB, so that the terminal can determine the first DRB based on the first EBI and release the first DRB, and establish the second DRB based on the first QoS parameter.

It should be noted that for the content of the first QoS parameter, reference may be made to the specific description in the related art, which is not repeated in the embodiments of this application.

In the embodiment of this application, the first DRB with the configuration parameter modified is usable to transmit the service data of the first service.

In some embodiments of this application, the configuration parameter corresponding to the first DRB may specifically be a QoS parameter, and the first configuration information may include a first EBI and a first QoS parameter, where the first EBI is used for the terminal to determine or identify the first DRB, and the first QoS parameter is used to modify the QoS parameter corresponding to the first DRB, allowing the terminal to modify the QoS parameter corresponding to the first DRB to the first QoS parameter. In this way, the first DRB with the configuration parameter modified is usable to transmit the service data of the first service.

In some embodiments of this application, the first network device may send an RRC connection reconfiguration message to the terminal, where the RRC connection reconfiguration message carries the first configuration information.

The embodiment of this application provides a bearer establishment method. The first network device may receive, from a second network device, a first message for establishing a bearer for transmitting service data of a first service, and send first configuration information to a terminal based on the first message, where the first configuration information is used for at least one of the following: releasing a first DRB between the terminal and the first network device, and establishing a second DRB between the terminal and the first network device; and modifying a configuration parameter corresponding to the first DRB between the terminal and the first network device; where the first DRB is used to transmit service data of a second service, the second DRB is used to transmit the service data of the first service, and the first DRB with the configuration parameter modified is usable to transmit the service data of the first service. When the second network device indicates the first network device to establish a bearer for transmitting the service data of the first service, the first network device may send the first configuration information to the terminal, so that the terminal can release the first DRB already established between the terminal and the first network device, and establish a second DRB. That is, the terminal can first reduce the number of DRBs already established between the terminal and the first network device, and then establish the second DRB. In other words, the terminal can establish the second DRB while ensuring that the number of DRBs already established between the terminal and the first network device does not reach the upper limit, instead of directly establishing a new DRB for transmitting the service data of the first service. Therefore, it is possible to avoid a situation where the terminal cannot establish the second DRB anymore due to the number of DRBs already established between the terminal and the first network device having reached the upper limit. And/or, the terminal, upon receiving the first configuration information, can modify a configuration parameter corresponding to the first DRB already established between the terminal and the first network device to obtain a DRB for transmitting the service data of the first service. That is, instead of directly establishing a new DRB for transmitting the service data of the first service, the terminal can obtain, through modification, a DRB for transmitting the service data of the first service, without increasing the number of DRBs already established between the terminal and the first network device. Therefore, it is possible to avoid a situation where the terminal cannot establish the second DRB anymore due to the number of DRBs already established between the terminal and the first network device having reached the upper limit. This can reduce the probability that the terminal is unable to perform communication services with other devices, thereby improving the quality of communication between the terminal and other devices.

Certainly, the first network device sends the first configuration information to the terminal, which may cause the first DRB to be unable to transmit the service data of the second service. However, in this case, other network devices may still send information to the terminal through the connection channel corresponding to the first DRB prior to its configuration parameter modification (for example, the first connection channel in the following embodiments). Therefore, to save resources, the first network device may also make the connection channel corresponding to the first DRB unable to transmit the service data of the second service, to prevent other network devices from sending information to the terminal through the connection channel corresponding to the first DRB. This can improve the efficiency of transmitting service data through the connection channel corresponding to the second DRB (for example, the second connection channel in the following embodiments).

It should be noted that the "connection channel corresponding to the first DRB" can be understood as: a connection channel to which the first DRB prior to its configuration parameter modification belongs; or a connection channel connected to the first DRB and transmitting service data of the same service; for example, a PDN connection to which the first DRB prior to its configuration parameter modification belongs, or a PDU session to which the first DRB prior to its configuration parameter modification belongs. The "connection channel corresponding to the second DRB" can be understood as: a connection channel to which the second DRB belongs; or a connection channel connected to the second DRB and transmitting service data of the same service.

It should be noted that the embodiments of this application are described by using the network elements and messages in a 4G network as examples, but the embodiments of this application are also applicable to 5G networks and 6G networks.

Different examples are used below for description.

### Example 1: Not maintaining a connection between the first network device and the core network

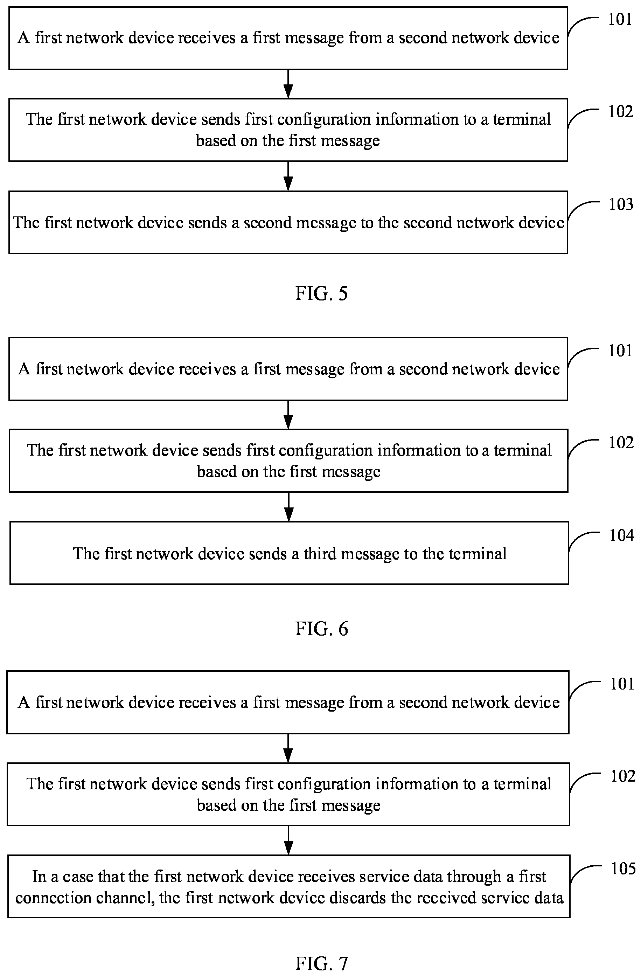

In this example, with reference to FIG. 4, as shown in FIG. 5, after the step 102, the bearer establishment method according to the embodiment of this application may further include the following step 103.

Step 103: The first network device sends a second message to the second network device.

In some embodiments of this application, after the first network device sends the first configuration information to the terminal, the terminal may send an RRC connection reconfiguration complete message to the first network device after releasing the first DRB and establishing the second DRB, and/or modifying the configuration parameter corresponding to the first DRB, so that the first network device can send the second message to the second network device.

In the embodiments of this application, the second message is used for any one of the following:
releasing a resource corresponding to a first connection channel; and
deleting a first connection channel.

The first connection channel is used to transmit the service data of the second service.

In some embodiments of this application, the first connection channel may be any one of the following: a PDN connection, an EPS bearer, a part of an EPS bearer between the first network device and the core network (for example, the SGW), a PDU session, a QoS flow, and a part of a QoS flow between the first network device and the core network (for example, the UPF).

It can be understood that in a case that the second network device is an MME network element, the first connection channel may be any one of the following: a PDN connection, an EPS bearer, and a part of an EPS bearer between the first network device and the core network (for example, the SGW). In a case that the second network device is an AMF network element, the first connection channel may be any one of the following: a PDU session, a QoS flow, and a part of a QoS flow between the first network device and the core network (for example, the UPF).

In some embodiments of this application, in a case that the second network device is an MME network element, the second message may specifically be an S1 UE context release request message. The S1 UE context release request message may include at least one of the following: an EBI, a linked EPS bearer identity (Linked EPS Bearer ID, LBI). In this way, the second network device may determine the first connection channel based on the EBI and/or the LBI.

In some embodiments of this application, in a case that the second network device is an AMF network element, the second message may specifically be an N2 UE context release request message. The N2 UE context release request message may include: a PDU session ID of a PDU session corresponding to the first DRB prior to its configuration parameter modification, so that the second network device can determine the first connection channel based on the PDU session ID.

In some embodiments of this application, after the first network device sends the second message to the second network device, the second network device may release the resource corresponding to the first connection channel, and in this case, context information of the first connection channel still exists; or the second network device may delete the first connection channel, and in this case, context information of the first connection channel is also deleted, that is, the context information of the first connection channel does not exist.

In this way, since the first network device can indicate the second network device to release the resource corresponding to the first connection channel, or delete the first connection channel, it is possible to avoid a situation where other devices send information to the terminal through the first connection channel, thereby saving resources of the network device.

In this example, with reference to FIG. 4, as shown in FIG. 6, after the step 102, the bearer establishment method according to the embodiment of this application may further include the following step 104.

Step 104: The first network device sends a third message to the terminal.

In the embodiment of this application, the third message is used to release a radio resource control (Radio Resource Control, RRC) connection between the terminal and the first network device.

In some embodiments of this application, after the first network device sends the first configuration information to the terminal, a session establishment procedure may be executed according to steps 13 to 22 in FIG. 1, so that the terminal can make a voice call with another device. In this way, when the voice call between the terminal and the another device ends, the first network device may send the third message to the terminal.

In some embodiments of this application, after the first network device sends the third message to the terminal, the terminal may release the RRC connection between the terminal and the first network device, enter an idle state, and re-establish an RRC connection between the terminal and the first network device to enter a connected state.

In this way, since a situation may arise where the core network deletes the first connection channel for transmitting the service data of the second service, the first network device may indicate the terminal to release the RRC connection between the terminal and the first network device. This allows the terminal to re-establish a first connection channel in the subsequent process of re-establishing an RRC connection between the terminal and the first network device, so that the terminal can continue to perform the second service with other devices through the first connection channel. Therefore, it is possible to avoid a situation where the terminal cannot continue to perform the second service with other devices through the first connection channel.

In some embodiments of this application, before the step 104, the bearer establishment method according to the embodiment of this application may further include the following step 1031, and the step 104 may specifically be implemented by the following step 104a.

Step 1031: The first network device receives a fourth message from the second network device.

In the embodiments of this application, the fourth message is used to indicate any one of the following:
releasing a connection between the first network device and the second network device; and
releasing a second connection channel.

The second connection channel is used to transmit the service data of the first service.

In some embodiments of this application, when the voice call between the terminal and another device ends, the terminal may send a Bye message to another terminal, so that the another terminal can return a 200 OK message to the terminal, enabling the P-CSCF network element to send call end information to the PCRF network element. Then the PGW can send a delete bearer (Delete Bearer) request message to the SGW, where the delete bearer request message is used to delete a second connection channel, and the second connection channel is used to transmit the service data of the first service. In this way, the SGW may send a delete bearer request message to the second network device, where the delete bearer request message is used to delete the second connection channel. Then the second network device may send the fourth message to the first network device, where the fourth message is a deactivate bearer (Deactivate Bearer) request message.

Step 104a: The first network device sends the third message to the terminal based on the fourth message.

It should be noted that "the first network device sends the third message to the terminal based on the fourth message" may be understood as follows: the first network device first receives the fourth message, and then sends the third message to the terminal; or the first network device may send the third message to the terminal based on information in the fourth message.

In this way, the first network device may also accurately indicate, based on an indication from the second network device, the terminal to release the RRC connection between the terminal and the first network device. Therefore, it is possible to avoid a degradation in the quality of communication between the terminal and other devices caused by inaccurate timing when the first network device indicates the terminal to release the RRC connection between the terminal and the first network device.

### Example 2: Maintaining a connection between the first network device and the core network

In a possible implementation of this example, with reference to FIG. 4, as shown in FIG. 7, after the step 102, the bearer establishment method according to the embodiment of this application may further include the following step 105.

Step 105: In a case that the first network device receives service data through a first connection channel, the first network device discards the received service data.

In the embodiment of this application, the first connection channel is used to transmit the service data of the second service.

In the embodiment of this application, after the first network device sends the first configuration information to the terminal, the terminal may have released the first DRB, and/or have modified the configuration parameter corresponding to the first DRB, which may cause the service data to be unable to be transmitted through the first connection channel. Therefore, the first network device may directly discard the received service data in a case that service data is received through the first connection channel.

In this way, the first network device may directly discard the service data received through the first connection channel, instead of sending the service data to the terminal through the first connection channel. Therefore, it is possible to avoid a failure in sending the service data caused by the first DRB being unable to transmit the service data of the second service, thereby saving the resources required for sending the service data.

In some embodiments of this application, before the step 105, the bearer establishment method according to the embodiment of this application may further include the following step 1041.

Step 1041: The first network device marks a state of the first connection channel as a first state.

In the embodiment of this application, the first state is used to characterize that the first connection channel is unable to transmit the service data of the second service.

In some embodiments of this application, the first state may specifically be: an unavailable state, or a deactivated (for example, inactive or deactive) state.

In some embodiments of this application, after the first network device sends the first configuration information to the terminal, the terminal may send an RRC connection reconfiguration complete message to the first network device after releasing the first DRB and establishing the second DRB, and/or modifying the configuration parameter corresponding to the first DRB, so that the first network device can mark the state of the first connection channel as the first state.

In this way, since the first network device can mark the state of the first connection channel as the first state, in a case that service data is received again subsequently, the first network device can directly determine, based on the first state, that the first connection channel is unable to transmit the service data of the second service, without needing to spend time determining whether the first connection channel can transmit the service data of the second service. Therefore, the time consumed by the first network device in processing the service data can be reduced.

In some embodiments of this application, after the step 105, the bearer establishment method according to the embodiment of this application may further include the following step 106 and step 107.

Step 106: The first network device receives a seventh message from the second network device.

In the embodiment of this application, the seventh message is used to indicate deleting a second connection channel, where the second connection channel is used to transmit the service data of the second service.

In some embodiments of this application, when the voice call between the terminal and another device ends, the terminal may send a Bye message to another terminal, so that the another terminal can return a 200 OK message to the terminal, enabling the P-CSCF network element to send call end information to the PCRF network element. Then the PGW can send a delete bearer (Delete Bearer) request message to the SGW, where the delete bearer request message is used to delete a second connection channel, and the second connection channel is used to transmit the service data of the first service. In this way, the SGW may send a delete bearer request message to the second network device, where the delete bearer request message is used to delete the second connection channel. Then the second network device may send the seventh message to the first network device, where the seventh message may specifically be a deactivate bearer (Deactivate Modify) request message.

Step 107: The first network device sends second configuration information to the terminal based on the seventh message.

The second configuration information is used for at least one of the following:
releasing the second DRB and establishing the first DRB; and
modifying the configuration parameter corresponding to the first DRB.

In some embodiments of this application, based on the seventh message, the first network device may obtain a second EBI and a second QoS parameter, where the second EBI is used for the terminal to determine the second DRB, the second QoS parameter is used for the terminal to establish the first DRB; and generate the seventh message based on the second EBI and the second QoS parameter. In this way, the terminal may determine the second DRB based on the second EBI, release the second DRB, and establish the first DRB based on the second QoS parameter.

In the embodiment of this application, the first DRB with the configuration parameter modified is usable to transmit the service data of the second service.

It can be understood that the terminal may modify a configuration parameter corresponding to the first DRB again.

In some embodiments of this application, the configuration parameter corresponding to the first DRB may specifically be a QoS parameter, and the second configuration information may include a first EBI and a second QoS parameter, where the first EBI is used for the terminal to determine or identify the first DRB, and the second QoS parameter is used to modify the QoS parameter corresponding to the first DRB again. This allows the terminal to modify the QoS parameter corresponding to the first DRB to the second QoS parameter. In this way, the first DRB with the configuration parameter modified is usable to transmit the service data of the second service.

In this way, since the first network device may also send the second configuration information to the terminal based on the indication from the second network device, to allow the terminal to release the second DRB and establish the first DRB, and/or modify the configuration parameter corresponding to the first DRB, the service data of the second service can continue to be transmitted through the first DRB and/or the first DRB with the configuration parameter modified. Therefore, it is possible to avoid a situation where the terminal cannot continue to perform the second service with other devices.

In some embodiments of this application, after the step 1041, the bearer establishment method according to the embodiment of this application may further include the following step 1042.

Step 1042: The first network device marks the state of the first connection channel as a second state.

In the embodiment of this application, the second state is used to characterize that the first connection channel is able to transmit service data of the second service.

In some embodiments of this application, the second state may be: an available state or a normal state.

In some embodiments of this application, in a case that the first network device sends the second configuration information to the terminal, the first network device may mark the state of the first connection channel as the second state.

In this way, since the first network device can mark the state of the first connection channel as the second state, in a case that service data is received again subsequently, the first network device can directly determine, based on the second state, that the first connection channel is able to transmit the service data of the second service, without needing to spend time determining whether the first connection channel can transmit the service data of the second service. Therefore, the time consumed for transmitting the service data of the second service can be reduced.

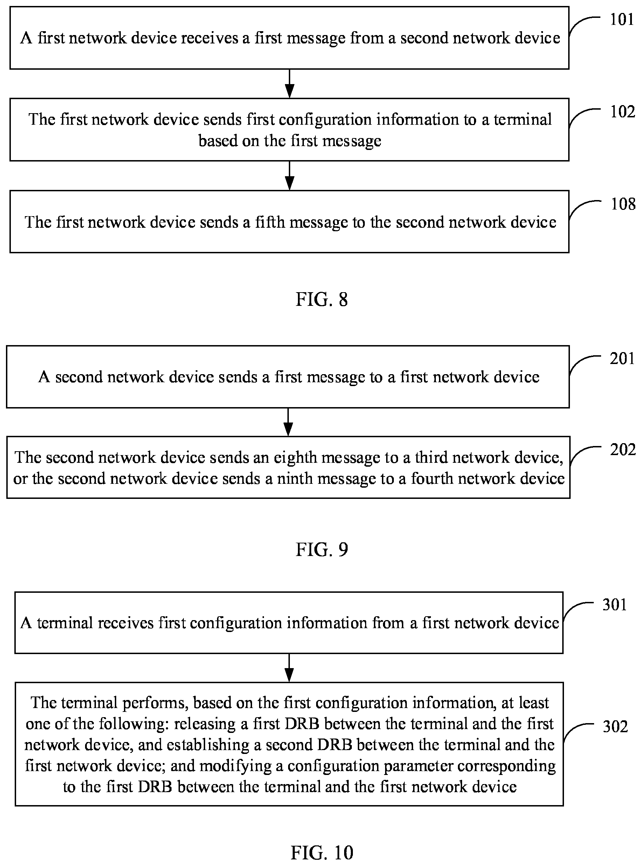

In another possible implementation of this example, with reference to FIG. 4, as shown in FIG. 8, after the step 102, the bearer establishment method according to the embodiment of this application may further include the following step 108.

Step 108: The first network device sends a fifth message to the second network device.

In the embodiment of this application, the fifth message is used to indicate that the first connection channel is unable to transmit the service data of the second service, and the first connection channel is used to transmit the service data of the second service.

In some embodiments of this application, the fifth message further carries an EBI or an LBI corresponding to the first connection channel, so that the second network device can determine the first connection channel based on the EBI or the LBI.

In some embodiments of this application, in a case that the second network device is an AMF network element, the fifth message may specifically be an Nsmf_PDSession_UpdateSMContext Request message.

In some embodiments of this application, the fifth message is used to indicate that a state of the first connection channel is a third state, where the third state is used to characterize that the first connection channel is unable to transmit the service data of the second service.

Optionally, the third state may specifically be: an unavailable state or a deactivated (inactive or deactive) state.

In some embodiments of this application, after the first network device sends the first configuration information to the terminal, the terminal may send an RRC connection reconfiguration complete message to the first network device after releasing the first DRB and establishing the second DRB, and/or modifying the configuration parameter corresponding to the first DRB, so that the first network device can send the fifth message to the second network device.

In this way, since the first network device can indicate to the second network device that the first connection channel is unable to transmit the service data of the second service, the second network device can notify other core network devices to directly discard the service data received through the first connection channel, instead of sending the service data to the terminal through the first connection channel. Therefore, resources required for transmitting the service data can be saved.

In some embodiments of this application, after the step 108, the first network device may further perform the steps 106 and 107 to send second configuration information to the terminal.

It should be noted that for the description of the first network device executing the steps 106 and 107, reference may be made to the specific description in the foregoing embodiments. Details are not repeated in the embodiments of this application.

In some embodiments of this application, after the step 108, the bearer establishment method according to the embodiment of this application may further include the following step 109.

Step 109: The first network device sends a sixth message to the second network device.

In the embodiment of this application, the sixth message is used to indicate that the first connection channel is able to transmit the service data of the second service.

In some embodiments of this application, the sixth message further carries an EBI or an LBI corresponding to the first connection channel, so that the second network device can determine the first connection channel based on the EBI or the LBI.

In some embodiments of this application, the sixth message is used to indicate that a state of the first connection channel is a fourth state, where the fourth state is used to characterize that the first connection channel is able to transmit the service data of the second service.

Optionally, the fourth state may specifically be: an available state or a normal state.

In some embodiments of this application, in a case that the first network device sends the second configuration information to the terminal, the first network device may send the sixth message to the second network device.

In this way, since the first network device can indicate to the second network device that the first connection channel is able to transmit the service data of the second service, the second network device can notify other core network devices that they can continue to transmit the service data received through the first connection channel, instead of discarding the service data. Therefore, it is possible to avoid a situation where the terminal cannot continue to perform the second service with other devices.

The bearer establishment method according to the embodiments of this application may be executed by a second bearer establishment apparatus, or a second network device, or a functional module or entity in the second network device. In the embodiments of this application, the second network device executing the bearer establishment method is used as an example to describe a bearer establishment method according to an embodiment of this application.

FIG. 9 is a schematic flowchart of a bearer establishment method according to an embodiment of this application. As shown in FIG. 9, the bearer establishment method according to the embodiment of this application may include the following step 201 and step 202.

Step 201: The second network device sends a first message to a first network device.

In some embodiments of this application, the first network device is an access network device, and the second network device is a core-network network element such as an MME network element or an AMF network element.

In the embodiment of this application, the first message is used to establish a bearer for transmitting service data of a first service.

In the embodiment of this application, the first message is used to trigger the first network device to send first configuration information to a terminal.

It should be noted that for the description of the second network device sending the first message to the first network device, reference may be made to the specific description in the foregoing embodiments. Details are not repeated in the embodiment of this application.

Step 202: The second network device sends an eighth message to a third network device, or the second network device sends a ninth message to a fourth network device.

In some embodiments of this application, the third network device may specifically be an SGW.

In the embodiment of this application, the eighth message is used for any one of the following:
releasing a resource corresponding to a first connection channel; and
deleting a first connection channel.

The first connection channel is used to transmit service data of a second service.

Optionally, the eighth message is used to trigger the third network device to release the resource corresponding to the first connection channel, or delete the first connection channel.

In some embodiments of this application, the first service is a voice service, and the second service is a data service.

In some embodiments of this application, in a case that the eighth message is used to release the resource corresponding to the first connection channel, if the second network device is an MME network element, the eighth message may specifically be a Release Access Bearer Request message; or if the second network device is an AMF network element, the eighth message may specifically be an Nsmf_ PDUSession_UpdateSMContext Request message.

In some embodiments of this application, in a case that the eighth message is used to delete the first connection channel, if the second network device is an MME network element, the eighth message may specifically be a Delete Session Request message; or if the second network device is an AMF network element, the eighth message may specifically be an Nsmf_PDUSession_ReleaseSMContext message.

In the embodiment of this application, the ninth message is used to indicate that the first connection channel is unable to transmit the service data of the second service, and the first connection channel is used to transmit the service data of the second service.

In some embodiments of this application, the fourth network device may specifically be a PGW.

In some embodiments of this application, the ninth message is used to indicate that a state of the first connection channel is a third state, where the third state is used to characterize that the first connection channel is unable to transmit the service data of the second service.

Optionally, the ninth message is used to trigger the fourth network device to mark the state of the first connection channel as the third state.

In some embodiments of this application, the second network device may send the ninth message to the fourth network device through the third network device.

In some embodiments of this application, after the second network device sends the ninth message to the fourth network device, the fourth network device may mark the state of the first connection channel as the third state, and in a case that service data is received through the first connection channel, directly discard the received service data.

It can be understood that the solution where the second network device sends the eighth message to the third network device corresponds to Example 1 in the foregoing embodiment, that is, the solution of not maintaining a connection between the first network device and the core network. The solution where the second network device sends the ninth message to the fourth network device corresponds to Example 2 in the foregoing embodiment, that is, the solution of maintaining a connection between the first network device and the core network.

The embodiment of this application provides a bearer establishment method. The second network device may send a first message for establishing a bearer for transmitting service data of a first service to a first network device, and send an eighth message to a third network device, or send a ninth message to a fourth network device; where the eighth message is used for any one of the following: releasing a resource corresponding to a first connection channel; and deleting a first connection channel; the first connection channel is used to transmit service data of a second service; and the ninth message is used to indicate that the first connection channel is unable to transmit the service data of the second service, and the first connection channel is used to transmit the service data of the second service. Since the second network device indicates the first network device to establish a bearer for transmitting the service data of the first service, a situation may arise where the first connection channel is unable to transmit the service data of the second service. In this case, the second network device may notify the third network device to release the resource corresponding to the first connection channel and delete the first connection channel, to prevent other network devices from using resources to transmit information through the first connection channel. Therefore, resources occupied for transmitting information through the first connection channel can be saved, to reduce the probability of a low rate for transmitting the service data of the first service with other devices caused by resource insufficiency. Alternatively, the second network device may notify the fourth network device that the first connection channel is unable to transmit the service data of the second service, so the fourth network device can transmit information through the first connection channel without using resources. Therefore, resources occupied for transmitting information through the first connection channel can be saved, to reduce the probability of a low rate for transmitting the service data of the first service with other devices caused by resource insufficiency. This can improve the efficiency of the terminal in performing the first service with other devices, thereby improving the quality of communication between the terminal and other devices.

The following uses different examples for description.

### Example 1: Not maintaining a connection between the first network device and the core network

In this example, the step 202 that "the second network device sends an eighth message to a third network device" may specifically be implemented by any one of the following step 202a and step 202b.

Step 202a: In a case that a second message is received from the first network device, the second network device sends the eighth message to the third network device based on the second message.

In the embodiment of this application, the second message is used for any one of the following:
releasing a resource corresponding to a first connection channel; and
deleting a first connection channel.

It should be noted that for the description of the first network device sending the second message, reference may be made to the specific description in the foregoing embodiments. Details are not repeated in the embodiment of this application.

In this way, since the first network device can indicate the second network device to release the resource corresponding to the first connection channel, or delete the first connection channel, the second network device can indicate the third network device to release the resource corresponding to the first connection channel, or delete the first connection channel. Therefore, it is possible to avoid a situation where other devices send information to the terminal through the first connection channel, thereby saving resources of the network device.

Step 202b: In a case that a tenth message is received from a fourth network device, the second network device sends the eighth message to the third network device based on the tenth message.

In the embodiment of this application, the tenth message is used to establish a bearer for transmitting the service data of the first service.

In some embodiments of this application, after the terminal sends an Invite message to the P-CSCF network element, steps 4 to 9 in FIG. 1 may be performed, so that the fourth network device (for example, the PGW) can send the tenth message to the second network device through the third network device (for example, the SGW). The tenth message may specifically be an update bearer request message. Then the second network device can determine to send the eighth message to the third network device.

In this way, since the fourth network device can indicate the second network device to release the resource corresponding to the first connection channel, or delete the first connection channel, the second network device can indicate the third network device to release the resource corresponding to the first connection channel, or delete the first connection channel. Therefore, it is possible to avoid a situation where other devices send information to the terminal through the first connection channel, thereby saving resources of the network device.

In this example, after the step 201, the bearer establishment method according to the embodiment of this application may further include the following step 203.

Step 203: The second network device sends a fourth message to the first network device.

It should be noted that the execution order of step 203 and step 202 is not limited in the embodiments of this application. In one example, the second network device may perform step 203 first, and then perform step 202; in another example, the second network device may perform step 202 first, and then perform step 203; in still another example, the second network device may perform step 203 and step 202 simultaneously.

In the embodiment of this application, the fourth message is used to indicate any one of the following:
releasing a connection between the first network device and the second network device; and
releasing a second connection channel.

In the embodiment of this application, the second connection channel is used to transmit the service data of the first service.

It should be noted that for the description of the second network device sending the fourth message to the first network device, reference may be made to the specific description in the foregoing embodiments. Details are not repeated in the embodiments of this application.

In this way, since the second network device may also indicate the first network device to release the connection between the first network device and the second network device or release the second connection channel, the first network device can accurately instruct, based on the indication, the terminal to release the RRC connection between the terminal and the first network device. Therefore, it is possible to avoid a degradation in the quality of communication between the terminal and other devices caused by inaccurate timing when the first network device indicates the terminal to release the RRC connection between the terminal and the first network device.

In this example, the fourth message is used to indicate releasing the connection between the first network device and the second network device. Before the step 203, the bearer establishment method according to the embodiment of this application may further include the following step 2021, and the step 203 may specifically be implemented by the following step 203a.

Step 2021: The second network device receives an eleventh message from the third network device.

In the embodiment of this application, the eleventh message is used to delete the second connection channel.

In some embodiments of this application, when the voice call between the terminal and another device ends, the terminal may send a Bye message to another terminal, so that the another terminal can return a 200 OK message to the terminal, enabling the P-CSCF network element to send call end information to the PCRF network element. Then the fourth network device can send a delete bearer (Delete Bearer) request message to the third network device, where the delete bearer request message is used to delete the second connection channel, and the second connection channel is used to transmit the service data of the first service. In this way, the third network device may send the eleventh message to the second network device, where the eleventh message may specifically be a delete bearer request message.

Step 203a: The second network device sends the fourth message to the first network device based on the eleventh message.

In this way, based on the indication from the third network device, the second network device can accurately indicate, through the first network device, the terminal to release the RRC connection between the terminal and the first network device. Therefore, it is possible to avoid a degradation in the quality of communication between the terminal and other devices caused by inaccurate timing when the first network device indicates the terminal to release the RRC connection between the terminal and the first network device.

### Example 2: Maintaining a connection between the first network device and the core network

In this example, the step 202 "the second network device sends a ninth message to a fourth network device" may specifically be implemented by any one of the following step 202c to step 202e.

Step 202c: In a case that a fifth message is received from the first network device, the second network device sends the ninth message to the fourth network device based on the fifth message.

In the embodiment of this application, the fifth message is used to indicate that the first connection channel is unable to transmit the service data of the second service.

In some embodiments of this application, the fifth message is used to indicate that a state of the first connection channel is a third state, where the third state is used to characterize that the first connection channel is unable to transmit the service data of the second service.

It should be noted that for the description of the second network device sending the ninth message to the fourth network device based on the fifth message, reference may be made to the specific description in the foregoing embodiments. Details are not repeated in the embodiments of this application.

In this way, based on the indication from the first network device, the second network device can accurately indicate to the fourth network device that the first connection channel is unable to transmit the service data of the second service, so that the fourth network device can directly discard the service data of the second service. Therefore, resources required for transmitting the service data of the second service can be saved.

Step 202d: In a case that a tenth message is received from the fourth network device, the second network device sends the ninth message to the fourth network device based on the tenth message.

In the embodiment of this application, the tenth message is used to establish a bearer for transmitting the service data of the first service.

In some embodiments of this application, after the terminal sends an Invite message to the P-CSCF network element, steps 4 to 9 in FIG. 1 may be performed, so that the fourth network device (for example, the PGW) can send the tenth message to the second network device through the third network device (for example, the SGW). The tenth message may specifically be an update bearer request message. Then the second network device can determine to send the ninth message to the fourth network device.

In this way, based on the indication from the fourth network device, the second network device can accurately execute, through the first network device, the terminal releasing the RRC connection between the terminal and the first network device. Therefore, it is possible to avoid a degradation in the quality of communication between the terminal and other devices caused by inaccurate timing when the first network device indicates the terminal to release the RRC connection between the terminal and the first network device.

Step 202e: In a case that a twelfth message is received from the terminal, the second network device sends the ninth message to the fourth network device based on the twelfth message.

In the embodiment of this application, the twelfth message is used to indicate that the first connection channel is unable to transmit the service data of the second service.

In some embodiments of this application, the twelfth message is used to indicate that the state of the first connection channel is the third state.

In some embodiments of this application, the twelfth message may specifically be a protocol configuration option (Protocol Configuration Option, PCO) message.

In some embodiments of this application, after the first network device sends the first configuration information to the terminal, the terminal may send an RRC connection reconfiguration complete message to the first network device after releasing the first DRB and establishing the second DRB, and/or modifying the configuration parameter corresponding to the first DRB, so that the terminal can send the twelfth message to the second network device.

In this way, based on the indication from the terminal, the second network device can accurately indicate to the fourth network device that the first connection channel is unable to transmit the service data of the second service, so that the fourth network device can directly discard the service data of the second service. Therefore, resources required for transmitting the service data of the second service can be saved.

In some embodiments of this application, after the step 202, the bearer establishment method according to the embodiment of this application may further include the following step 204.

Step 204: The second network device sends a seventh message to the first network device.

In the embodiment of this application, the seventh message is used to indicate deleting a second connection channel, where the second connection channel is used to transmit the service data of the second service.

The seventh message is used to trigger sending of second configuration information to the terminal, and the second configuration information is used for at least one of the following:
releasing the second DRB and establishing the first DRB; and
modifying a configuration parameter corresponding to the first DRB.

Herein, the first DRB with the configuration parameter modified is usable to transmit the service data of the second service.

In some embodiments of this application, when the voice call between the terminal and another device ends, the terminal may send a Bye message to another terminal, so that the another terminal can return a 200 OK message to the terminal, enabling the P-CSCF network element to send call end information to the PCRF network element. Then the PGW can send a delete bearer (Delete Bearer) request message to the SGW, where the delete bearer request message is used to delete the second connection channel, and the second connection channel is used to transmit the service data of the first service. In this way, the SGW may send a delete bearer request message to the second network device, where the delete bearer request message is used to delete the second connection channel. Then the second network device may send the seventh message to the first network device.

In this way, since the second network device may also indicate the first network device to send second configuration information to the terminal, to allow the terminal to release the second DRB and establish the first DRB, and/or modify the configuration parameter corresponding to the first DRB, the service data of the second service can continue to be transmitted through the first DRB and/or the first DRB with the configuration parameter modified. Therefore, it is possible to avoid a situation where the terminal cannot continue to perform the second service with other devices.

It should be noted that releasing the second DRB and establishing the first DRB may be sent through one RRC connection reconfiguration message, or may be sent through two RRC connection reconfiguration messages. For the case of sending through two RRC connection reconfiguration messages, the content of releasing the second DRB is sent first, and then the content of establishing the first DRB is sent.

In some embodiments of this application, after the step 202 "the second network device sends a ninth message to a fourth network device", the bearer establishment method according to the embodiment of this application may further include the following step 205.

Step 205: The second network device sends a thirteenth message to the fourth network device.

In the embodiment of this application, the thirteenth message is used to indicate that the first connection channel is able to transmit the service data of the second service.

In some embodiments of this application, the thirteenth message is used to indicate that a state of the first connection channel is a fourth state, where the fourth state is used to characterize that the first connection channel is able to transmit the service data of the second service.

In this way, since the second network device may indicate to the fourth network device that the first connection channel is able to transmit the service data of the second service, the fourth network device can continue to transmit the service data received through the first connection channel, instead of discarding the service data. Therefore, it is possible to avoid a situation where the terminal cannot continue to perform the second service with other devices.

In some embodiments of this application, the step 205 may specifically be implemented by any one of the following step 205a to step 205c.

Step 205a: In a case that a sixth message is received from the first network device, the second network device sends the thirteenth message to the fourth network device based on the sixth message.

In the embodiment of this application, the sixth message is used to indicate that the first connection channel is able to transmit the service data of the second service.

In some embodiments of this application, in a case that the first network device sends the second configuration information to the terminal, the first network device may send the sixth message to the second network device, so that the second network device can send the thirteenth message to the fourth network device.

In some embodiments of this application, the sixth message is used to indicate that a state of the first connection channel is a fourth state, where the fourth state is used to characterize that the first connection channel is able to transmit the service data of the second service.

In this way, since the first network device can indicate to the second network device that the first connection channel is able to transmit the service data of the second service, the second network device can notify the fourth network device that it can continue to transmit the service data received through the first connection channel, instead of discarding the service data. Therefore, it is possible to avoid a situation where the terminal cannot continue to perform the second service with other devices.

Step 205b: In a case that a fourteenth message is received from the fourth network device, the second network device sends the thirteenth message to the fourth network device based on the fourteenth message.

In the embodiment of this application, the fourteenth message is used to delete a second connection channel, where the second connection channel is used to transmit the service data of the second service.

In some embodiments of this application, when the voice call between the terminal and another device ends, the terminal may send a Bye message to another terminal, so that the another terminal can return a 200 OK message to the terminal, enabling the P-CSCF network element to send call end information to the PCRF network element. Then the fourth network device can send a delete bearer request message to the second network device through the third network device, that is, the fourteenth message may specifically be a delete bearer request message. In this way, the second network device can determine to send the thirteenth message to the fourth network device.

In this way, since the fourth network device can indicate the second network device to delete the second connection channel, that is, the first candidate channel can continue to transmit service data subsequently, the second network device can directly notify the fourth network device that it can continue to transmit the service data received through the first connection channel, instead of discarding the service data. Therefore, it is possible to avoid a situation where the terminal cannot continue to perform the second service with other devices.

Step 205c: In a case that a fifteenth message is received from the terminal, the second network device sends the thirteenth message to the fourth network device based on the fifteenth message.

In the embodiment of this application, the fifteenth message is used to indicate that the first connection channel is able to transmit the service data of the second service.

In some embodiments of this application, the fifteenth message is used to indicate that the state of the first connection channel is a fourth state.

In some embodiments of this application, in a case that the terminal releases the second DRB and establishes the first DRB based on the second configuration information, and/or modifies the configuration parameter corresponding to the first DRB, that is, in a case that the service data of the second service can continue to be transmitted through the first DRB and/or the first DRB with the configuration parameter modified, the terminal may send the fifteenth message to the second network device, so that the second network device can determine to send the thirteenth message to the fourth network device.

In this way, since the terminal can also indicate to the second network device that the first connection channel is able to transmit the service data of the second service, the second network device can directly notify the fourth network device that it can continue to transmit the service data received through the first connection channel, instead of discarding the service data. Therefore, it is possible to avoid a situation where the terminal cannot continue to perform the second service with other devices.

The bearer establishment method according to the embodiments of this application may be executed by a fourth bearer establishment apparatus, or a terminal, or a functional module or entity in the terminal. In the embodiment of this application, a terminal executing the bearer establishment method is used as an example to describe a bearer establishment method according to an embodiment of this application.

FIG. 10 is a schematic flowchart of a bearer establishment method according to an embodiment of this application. As shown in FIG. 10, the bearer establishment method according to the embodiment of this application may include the following step 301 and step 302.

Step 301: The terminal receives first configuration information from a first network device.

In some embodiments of this application, in a case that the terminal is connected to the first network device, when the terminal initiates a voice call to another terminal, the terminal may send an Invite message to a P-CSCF network element and trigger a voice call procedure. Then steps 4 to 12 in FIG. 1 may be performed, so that the first network device can receive a bearer modify request message, that is, the first message, from a second network device, and send the first configuration information to the terminal based on the first message, and the terminal can receive the first configuration information.

Step 302: The terminal performs, based on the first configuration information, at least one of the following:
releasing a first DRB between the terminal and the first network device, and establishing a second DRB between the terminal and the first network device; and
modifying a configuration parameter corresponding to the first DRB between the terminal and the first network device.

In the embodiment of this application, the first DRB is used to transmit service data of a second service, the second DRB is used to transmit service data of a first service, and the first DRB with the configuration parameter modified is usable to transmit the service data of the first service.

In some embodiments of this application, the first service is a voice service, and the second service is a data service.

The embodiment of this application provides a bearer establishment method. The terminal may receive first configuration information from the first network device, and release a first DRB between the terminal and the first network device and establish a second DRB between the terminal and the first network device based on the first configuration information, and/or modify a configuration parameter corresponding to the first DRB between the terminal and the first network device; where the first DRB is used to transmit service data of a second service, the second DRB is used to transmit service data of a first service, and the first DRB with the configuration parameter modified is usable to transmit the service data of the first service. The terminal, upon receiving the first configuration information, can release the first DRB already established between the terminal and the first network device, and establish a second DRB. That is, the terminal can first reduce the number of DRBs already established between the terminal and the first network device, and then establish the second DRB. In other words, the terminal can establish the second DRB while ensuring that the number of DRBs already established between the terminal and the first network device does not reach the upper limit, instead of directly establishing a new DRB for transmitting the service data of the first service. Therefore, it is possible to avoid a situation where the terminal cannot establish the second DRB anymore due to the number of DRBs already established between the terminal and the first network device having reached the upper limit. And/or, the terminal, upon receiving the first configuration information, can modify a configuration parameter corresponding to the first DRB already established between the terminal and the first network device to obtain a DRB for transmitting the service data of the first service. That is, instead of directly establishing a new DRB for transmitting the service data of the first service, the terminal can obtain, through modification, a DRB for transmitting the service data of the first service, without increasing the number of DRBs already established between the terminal and the first network device. Therefore, it is possible to avoid a situation where the terminal cannot establish the second DRB anymore due to the number of DRBs already established between the terminal and the first network device having reached the upper limit. This can reduce the probability that the terminal is unable to perform communication services with other devices, thereby improving the quality of communication between the terminal and other devices.

The following uses different examples for description.

### Example 1: Not maintaining a connection between the first network device and the core network

In this example, after the step 302, the bearer establishment method according to the embodiment of this application may further include the following steps 303 and 304.

Step 303: The terminal receives a third message from the first network device.

It should be noted that for the description of the terminal receiving the third message, reference may be made to the specific description in the foregoing embodiments. Details are not repeated in the embodiments of this application.

Step 304: The terminal releases an RRC connection between the terminal and the first network device based on the third message.

In this way, since the terminal can release the RRC connection between the terminal and the first network device based on the indication from the first network device, the terminal can enter an idle state. In this way, in subsequent steps, the terminal can re-establish the first connection channel in the process of establishing an RRC connection between the terminal and the first network device, so that the terminal can perform communication services with other devices through the first connection channel. Therefore, it is possible to avoid a situation where the terminal cannot perform communication services with other devices through the first connection channel.

In some embodiments of this application, after the step 304, the bearer establishment method according to the embodiment of this application may further include the following step 305.

Step 305: Upon completing release of an RRC connection between the terminal and the first network device, the terminal establishes an RRC connection between the terminal and the first network device based on a sixteenth message.

In the embodiment of this application, the sixteenth message includes at least one of the following: a service request message, a location update message, and a registration message.

It should be noted that for the description of the terminal obtaining the sixteenth message, reference may be made to the specific description in the related art. Details are not repeated in the embodiments of this application.

In some embodiments of this application, in a case that the first connection channel has been deleted, upon completing release of the RRC connection between the terminal and the first network device, the terminal may establish an RRC connection between the terminal and the first network device based on the sixteenth message.

In some embodiments of this application, in a case that the terminal completes establishment of an RRC connection between the terminal and the first network device, the terminal may further initiate an establishment procedure of the first connection channel.

In this way, upon completing release of the RRC connection between the terminal and the first network device, the terminal can directly establish an RRC connection between the terminal and the first network device based on the sixteenth message, without waiting until the terminal needs to transmit service data. Therefore, the terminal can directly transmit the service data to be transmitted, without waiting for the terminal to establish an RRC connection between the terminal and the first network device. In this way, the time consumed for transmitting service data can be reduced.

### Example 2: Not maintaining a connection between the first network device and the core network

In this example, after the step 302, the bearer establishment method according to the embodiment of this application may further include the following step 306.

Step 306: The terminal sends a twelfth message to a second network device.

In some embodiments of this application, the first network device is an access network device, and the second network device is a core-network network element such as an MME network element or an AMF network element.

In the embodiment of this application, the twelfth message is used to indicate that the first connection channel is unable to transmit the service data of the second service.

In some embodiments of this application, the twelfth message is used to indicate that a state of the first connection channel is a third state, where the third state is used to characterize that the first connection channel is unable to transmit the service data of the second service.

It should be noted that for the description of the terminal sending the twelfth message to the second network device, reference may be made to the specific description in the foregoing embodiments. Details are not repeated in the embodiments of this application.

In this way, since the terminal can indicate to the second network device that the first connection channel is unable to transmit the service data of the second service, the second network device can notify other core network devices to directly discard the service data received through the first connection channel, instead of sending the service data to the terminal through the first connection channel. Therefore, resources required for transmitting the service data can be saved.

In this example, after the step 302, the bearer establishment method according to the embodiment of this application may further include the following step 307 and step 308.

Step 307: The terminal receives second configuration information from the first network device.

It should be noted that for the description of the terminal receiving the second configuration information from the first network device, reference may be made to the specific description in the foregoing embodiments. Details are not repeated in the embodiments of this application.

Step 308: The terminal performs, based on the second configuration information, at least one of the following:
releasing the second DRB and establishing the first DRB; and
modifying a configuration parameter corresponding to the first DRB.

In the embodiment of this application, the first DRB with the configuration parameter modified is usable to transmit the service data of the second service.

In this way, since the terminal can receive the second configuration information from the first network device, the terminal can release the second DRB and establish the first DRB, and/or modify the configuration parameter corresponding to the first DRB, to continue transmitting the service data of the second service through the first DRB and/or the first DRB with the configuration parameter modified. Therefore, it is possible to avoid a situation where the terminal cannot continue to perform the second service with other devices.

In some embodiments of this application, after the step 308, the bearer establishment method according to the embodiment of this application may further include the following step 309.

Step 309: The terminal sends a fifteenth message to the second network device.

In the embodiment of this application, the fifteenth message is used to indicate that the first connection channel is able to transmit the service data of the second service.

It should be noted that for the description of the terminal sending the fifteenth message to the second network device, reference may be made to the specific description in the foregoing embodiments. Details are not repeated in the embodiments of this application.

In some embodiments of this application, the fifteenth message is used to indicate that a state of the first connection channel is a fourth state, where the fourth state is used to characterize that the first connection channel is able to transmit the service data of the second service.

In this way, since the terminal can also indicate to the second network device that the first connection channel is able to transmit the service data of the second service, the second network device can directly notify other core network devices to continue transmitting the service data received through the first connection channel, instead of discarding the service data. Therefore, it is possible to avoid a situation where the terminal cannot continue to perform the second service with other devices.

The following describes the complete process of the bearer establishment method according to the embodiments of this application through specific examples.

Assuming that the first network device is an access network device (for example, an eNB), the second network device is an MME network element, the third network device is an SGW, and the fourth network device is a PGW.

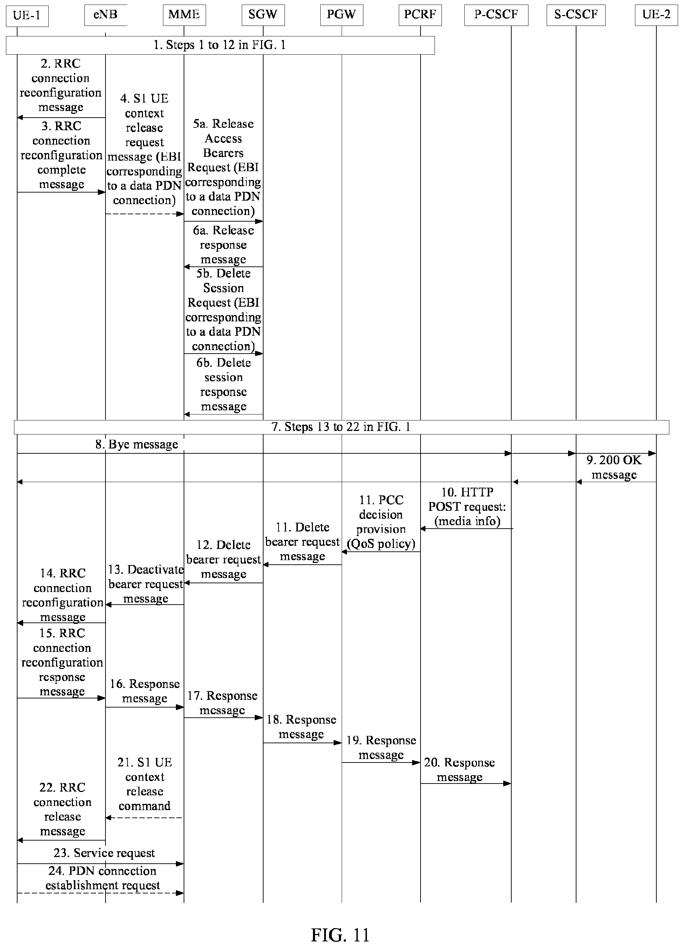

In a possible embodiment, a connection between the first network device and a core network may be maintained. As shown in FIG. 11, the following steps are specifically included.
(1) Steps 1 to 11 in FIG. 1 may be performed, so that the MME can send a bearer modify (Bearer Modify) request message (that is, the first message in the foregoing embodiments) to the eNB, where the bearer modify request message contains a QoS parameters and an EBI corresponding to a dedicated voice bearer.
(2) The eNB may send an RRC connection reconfiguration message to the terminal (for example, UE-1), where the RRC connection reconfiguration message includes first configuration information, and the first configuration information may include at least one of the following: information of releasing (release) a DRB (that is, the first DRB) corresponding to a data PDN connection (that is, a PDN connection for transmitting service data of the first service) and establishing a new DRB (that is, the second DRB) corresponding to a voice bearer; and information of modifying a DRB (that is, the first DRB) corresponding to a data PDN connection (that is, a PDN connection for transmitting service data of the first service) to a DRB (that is, the second DRB) corresponding to a voice bearer.
(3) UE-1 sends an RRC connection reconfiguration complete message to the eNB.
(4) Optionally, the eNB may send an S1 UE context release request message (that is, the second message in the foregoing embodiments) to the MME, where the S1 UE context release request message contains EBI information corresponding to the data PDN connection, and the EBI may also be an LBI.
(5) As shown in 5a in FIG. 11, through a Release Access Bearer Request message, the MME network element initiates to the SGW a request message for releasing a data PDN connection of UE-1, where the request message contains an EBI or an LBI; or as shown in 5b in FIG. 11, through a Delete Session Request message, the MME network element initiates to the SGW a request for deleting a data PDN connection of UE-1, where the request contains EBI or LBI information. The Release Access Bearer Request message and the Delete Session Request message may be understood as the eighth message in the foregoing embodiments. Herein, it should be noted that the MME network element may send the eighth message according to step (4) of this example; or the MME network element may determine to send the eighth message by itself. For example, based on a message for establishing a dedicated voice bearer for UE-1 from the PGW, the MME network element may determine to release a PDN connection corresponding to a data service, so as to determine to send the eighth message.
(6) The SGW replies a confirmation message to the MME network element.
(7) Steps 13 to 22 in FIG. 1 are performed to complete a session establishment procedure.
(8) If UE-1 hangs up the phone, UE-1 sends a Bye message to UE-2 (that is, the another device in the foregoing embodiments).
(9) UE-2 returns a confirmation message to UE-1 through 200 OK.
(10) A P-CSCF network element sends call end information to a PCRF network element.
(11) The PGW sends a delete bearer (Delete Bearer) request message to the SGW, for deleting a dedicated voice bearer.
(12) The SGW sends a delete bearer request message (that is, the eleventh message in the foregoing embodiments) to the MME network element, for deleting the dedicated voice bearer.
(13) The MME network element sends a deactivate bearer (Deactivate Modify) request message to the eNB.
(14) The eNB sends an RRC connection reconfiguration message to UE-1, where the message is used to delete a DRB corresponding to the dedicated voice bearer.
(15) UE-1 returns an RRC connection reconfiguration response message.
(16) The eNB sends a response message to the MME network element.
(17) The MME network element sends the response message to the SGW.
(18) The SGW sends the response message to the PGW.
(19) The PGW sends the response message to the PCRF network element.
(20) The PCRF network element sends the response message to the P-CSCF network element.
(21) Optionally, the MME network element sends a message (that is, the fourth message in the foregoing embodiments) to the eNB, for releasing UE-1 to an idle state; where the MME network element may send the message to the eNB based on the dedicated voice bearer being released (step 12).
(22) The eNB sends an RRC connection release message (that is, the third message in the foregoing embodiments) to UE-1; where the eNB may send the release message to UE-1 based on the message in step 21; or the eNB may send the message in step 22 (that is, the third message in the foregoing embodiments) to UE-1 based on the dedicated voice bearer being released (step 13), in which case step 21 may not be performed.
(23) After entering an idle state, UE-1 immediately re-enters a connected state through the sixteenth message, where the sixteenth message includes at least one of the following: a service request message, a location update message, and a registration message; where based on the DRB (that is, the first DRB) corresponding to the data PDN connection being deleted during a call process, UE-1 may determine to re-enter the connected state after the call ends.
(24) Optionally, UE-1 may initiate a PDN connection establishment request.

In another possible embodiment, the connection between the first network device and the core network may not be maintained, specifically including the following three solutions.

Solution 1: The eNB marks the data PDN connection as unavailable or inactive, and discards the received data.

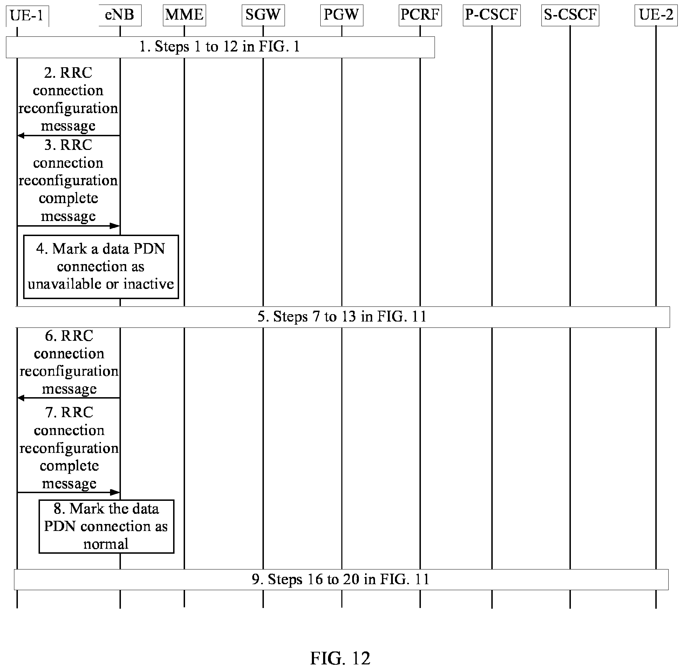

With reference to FIG. 11, as shown in FIG. 12, steps 1 to 3 are the same as steps 1 to 3 in FIG. 11.

(4) The eNB records the data PDN connection (that is, the first connection channel) as an unavailable state or a deactivated (inactive or deactive) state, that is, the first state in the foregoing embodiments; when the eNB receives data sent by the network to UE-1, the eNB directly discards the received data.

(5) Same as steps 7 to 13 in FIG. 11.

(6) The eNB sends an RRC connection reconfiguration message to UE-1, where the RRC connection reconfiguration message includes second configuration information, and the second configuration information includes any one of the following: information of releasing (release) a DRB corresponding to a voice bearer and establishing a new DRB corresponding to the data PDN connection; and information of releasing (release) a DRB corresponding to a voice bearer and establishing a new DRB corresponding to the data PDN connection.

(7) UE-1 sends an RRC connection reconfiguration complete message to the eNB. It should be noted that the steps 6 and 7 are performed based on the information recorded in step 4.

(8) The eNB marks the data PDN connection (that is, the first connection channel) as a normal state, that is, the second state.

(9) Steps 16 to 20 in FIG. 11 are performed.

Solution 2: The eNB notifies the MME network element, and the MME network element notifies the PGW not to use the data PDN connection to send downlink data.

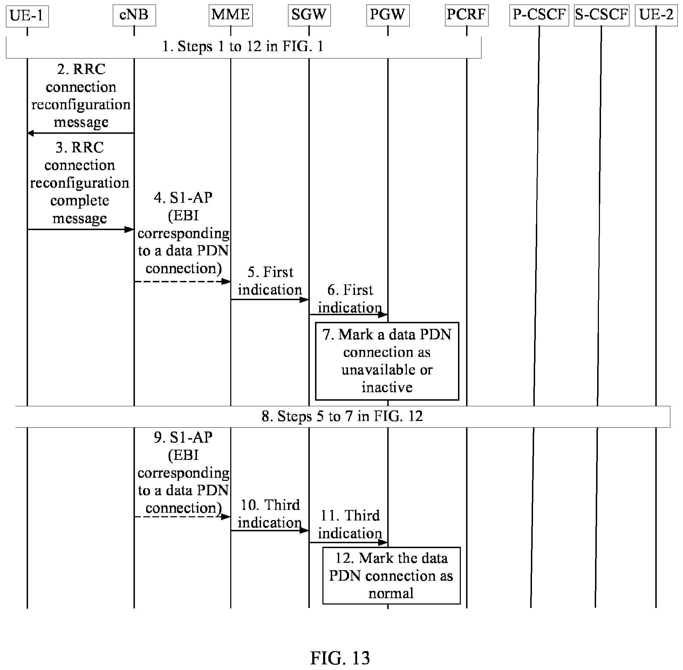

With reference to FIG. 11 and FIG. 12, as shown in FIG. 13, steps 1 to 3 are the same as steps 1 to 3 in FIG. 11.

(4) The eNB notifies the MME network element, for example, sends a fifth message to the MME network element, where the data PDN connection (that is, the first connection channel) is unavailable or in an inactive state, that is, the third state; and the fifth message may carry an EBI corresponding to the data PDN connection, and the EBI may also be an LBI.

(5) The MME network element sends a first indication (that is, the ninth message in the foregoing embodiments) to the SGW, indicating that the data PDN connection is unavailable or in an inactive state. It should be noted that the MME network element may determine, based on the message sent by the eNB in step 4, to initiate the first indication; or the MME network element itself may determine to send the first indication (in this case, step 4 does not need to be performed). Specifically, based on a message for establishing a dedicated voice bearer for UE-1 (that is, the tenth message) from the PGW, the MME network element determines to send the first indication.

(6) The SGW sends the first indication to the PGW.

(7) The PGW records the data PDN connection as an unavailable state or a deactivated (inactive or deactive) state, that is, the third state. When the PGW receives data to be sent to UE-1, the PGW directly discards the received data.

(8) Same as steps 5 to 7 in FIG. 12.

(9) The eNB notifies the MME network element, for example, notifies the MME network element through a sixth message that the data PDN connection is available or in a normal state, that is, in the fourth state. The eNB sends EBI information corresponding to the data PDN connection to the MME network element. The EBI may also be an LBI.

(10) The MME network element sends a third indication (that is, the thirteenth message) to the SGW, where the third indication is used to indicate that the data PDN connection is available or in a normal state; where the MME network element may determine, according to step 9, to send the third indication; or the MME network element may itself determine to send the third indication (in this case, step 9 does not need to be performed). Specifically, based on a message for deleting a dedicated voice bearer (that is, the fourteenth message) from the PGW, the MME network element determines to send the third indication.

(11) The SGW sends the third indication to the PGW.

(12) The PGW records the data PDN connection as an available state or a normal state, that is, in the fourth state. When the PGW receives data to be sent to UE-1, the PGW normally sends the data to UE-1.

Solution 3: UE-1 notifies the PGW not to use the data PDN connection to send downlink data.

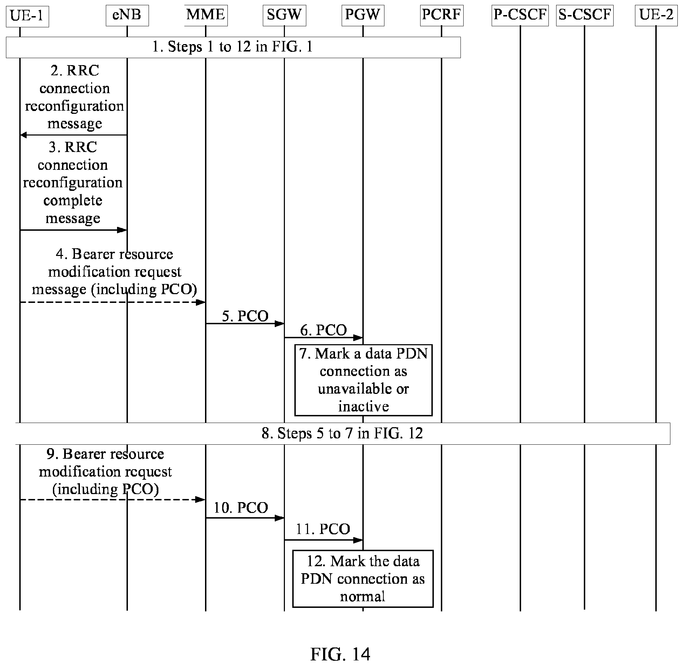

With reference to FIG. 11 and FIG. 12, as shown in FIG. 14, steps 1 to 3 are the same as steps 1 to 3 in FIG. 11.

(4) UE-1 sends a bearer resource modification request message (that is, the twelfth message), where a protocol configuration option (Protocol Configuration Option, PCO) of the request message carries first indication information, and the first indication is used to indicate that the data PDN connection is unavailable or in an inactive state, that is, in the third state.

(5) The MME network element sends the PCO to the SGW.

(6) The SGW network element sends the PCO to the PGW.

(7) The PGW records the data PDN connection (that is, the first connection channel) as an unavailable state or a deactivated (inactive or deactive) state based on the first indication information included in the PCO. When the PGW receives data to be sent to UE-1, the PGW directly discards the received data.

(8) Same as steps 5 to 7 in FIG. 12.

(9) UE-1 sends a bearer resource modification request (that is, the fifteenth message), where a PCO of the request message carries second indication information, and the second indication is used to indicate that the data PDN connection is available or in a normal state, that is, in the fourth state.

(10) The MME network element sends the PCO to the SGW.

(11) The SGW sends the PCO to the PGW.

(12) The PGW records the data PDN connection as an available state or a normal state, that is, the fourth state, based on the first indication information included in the PCO. When the PGW receives data to be sent to UE-1, the PGW normally sends the data to UE-1.

The bearer establishment method according to the embodiment of this application may be executed by a first bearer establishment apparatus. In the embodiments of this application, the first bearer establishment apparatus executing the bearer establishment method is used as an example to describe a first bearer establishment apparatus according to an embodiment of this application.

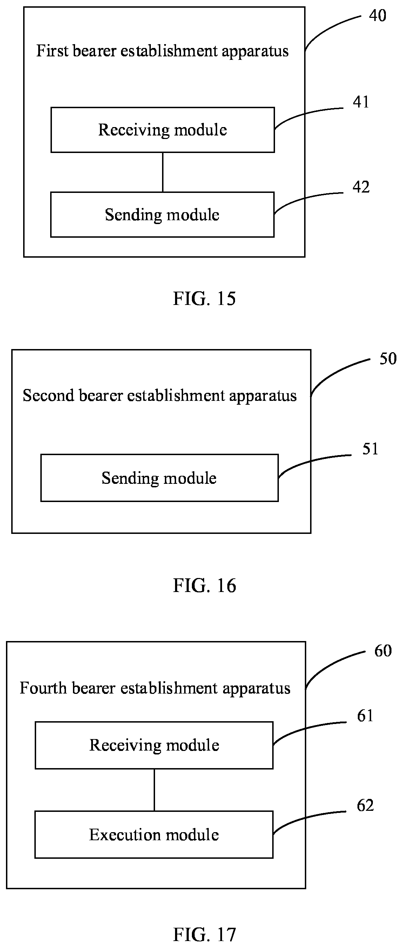

FIG. 15 is a possible schematic structural diagram of a bearer establishment apparatus in an embodiment of this application, where the bearer establishment apparatus is a first bearer establishment apparatus. As shown in FIG. 15, the first bearer establishment apparatus 40 may include: a receiving module 41 and a sending module 42.

The receiving module 41 is configured to receive a first message from a second bearer establishment apparatus, where the first message is used to establish a bearer for transmitting service data of a first service. The sending module 42 is configured to send first configuration information to a fourth bearer establishment apparatus based on the first message received by the receiving module 41, where the first configuration information is used for at least one of the following: releasing a first DRB between the first bearer establishment apparatus and the fourth bearer establishment apparatus, and establishing a second DRB between the first bearer establishment apparatus 40 and the fourth bearer establishment apparatus; and modifying a configuration parameter corresponding to the first DRB between the first bearer establishment apparatus 40 and the fourth bearer establishment apparatus. The first DRB is used to transmit service data of a second service, the second DRB is used to transmit the service data of the first service, and the first DRB with the configuration parameter modified is usable to transmit the service data of the first service.

The embodiment of this application provides a bearer establishment apparatus, where the bearer establishment apparatus is a first bearer establishment apparatus. When the second bearer establishment apparatus indicates the first bearer establishment apparatus to establish a bearer for transmitting service data of the first service, the first bearer establishment apparatus can send first configuration information to the fourth bearer establishment apparatus, so that the fourth bearer establishment apparatus can release the first DRB already established between the fourth bearer establishment apparatus and the first bearer establishment apparatus, and establish a second DRB. That is, the fourth bearer establishment apparatus can first reduce the number of DRBs already established between the fourth bearer establishment apparatus and the first bearer establishment apparatus, and then establish the second DRB. In other words, the fourth bearer establishment apparatus can establish the second DRB while ensuring that the number of DRBs already established between the fourth bearer establishment apparatus and the first bearer establishment apparatus does not reach the upper limit, instead of directly establishing a new DRB for transmitting the service data of the first service. Therefore, it is possible to avoid a situation where the fourth bearer establishment apparatus cannot establish the second DRB anymore due to the number of DRBs already established between the fourth bearer establishment apparatus and the first bearer establishment apparatus having reached the upper limit. And/or, the fourth bearer establishment apparatus, upon receiving the first configuration information, can modify a configuration parameter corresponding to the first DRB already established between the fourth bearer establishment apparatus and the first bearer establishment apparatus to obtain a DRB for transmitting the service data of the first service. That is, instead of directly establishing a new DRB for transmitting the service data of the first service, the fourth bearer establishment apparatus can obtain, through modification, a DRB for transmitting the service data of the first service, without increasing the number of DRBs already established between the fourth bearer establishment apparatus and the first bearer establishment apparatus. Therefore, it is possible to avoid a situation where the fourth bearer establishment apparatus cannot establish the second DRB anymore due to the number of DRBs already established between the fourth bearer establishment apparatus and the first bearer establishment apparatus having reached the upper limit. This can reduce the probability that the fourth bearer establishment apparatus is unable to perform communication services with other devices, thereby improving the quality of communication between the fourth bearer establishment apparatus and other devices.

In a possible implementation, the sending module 42 is further configured to send a second message to the second bearer establishment apparatus, where the second message is used for any one of the following: releasing a resource corresponding to a first connection channel; and deleting a first connection channel. The first connection channel is used to transmit the service data of the second service.

In a possible implementation, the sending module 42 is further configured to send a third message to the fourth bearer establishment apparatus, where the third message is used to release an RRC connection between the fourth bearer establishment apparatus and the first bearer establishment apparatus 40.

In a possible implementation, the receiving module 41 is further configured to receive a fourth message from the second bearer establishment apparatus. The sending module 42 is specifically configured to send the third message to the fourth bearer establishment apparatus based on the fourth message received by the receiving module 41. The fourth message is used to indicate any one of the following: releasing an RRC connection between the first bearer establishment apparatus 40 and the second bearer establishment apparatus; and releasing a second connection channel; where the second connection channel is used to transmit the service data of the first service.

In a possible implementation, the first bearer establishment apparatus 40 according to the embodiment of this application further includes: a processing module. The processing module is further configured to, in a case that the first bearer establishment apparatus 40 receives service data through a first connection channel, discard the received service data, where the first connection channel is used to transmit the service data of the second service.

In a possible implementation, the processing module is further configured to mark a state of the first connection channel as a first state, where the first state is used to characterize that the first connection channel is unable to transmit the service data of the second service.

In a possible implementation, the processing module is further configured to, after marking the state of the first connection channel as the first state, mark the state of the first connection channel as a second state, where the second state is used to characterize that the first connection channel is able to transmit the service data of the second service.

In a possible implementation, the sending module 42 is further configured to send a fifth message to the second bearer establishment apparatus, where the fifth message is used to indicate that a first connection channel is unable to transmit the service data of the second service. The first connection channel is used to transmit the service data of the second service.

In a possible implementation, the fifth message is used to indicate that a state of the first connection channel is a third state, where the third state is used to characterize that the first connection channel is unable to transmit the service data of the second service.

In a possible implementation, the sending module 42 is further configured to, after sending the fifth message to the second bearer establishment apparatus, send a sixth message to the second bearer establishment apparatus, where the sixth message is used to indicate that the first connection channel is able to transmit the service data of the second service.

In a possible implementation, the sixth message is used to indicate that a state of the first connection channel is a fourth state, where the fourth state is used to characterize that the first connection channel is able to transmit the service data of the second service.

In a possible implementation, the receiving module 41 is further configured to receive a seventh message from the second bearer establishment apparatus, where the seventh message is used to indicate deleting a second connection channel, and the second connection channel is used to transmit the service data of the second service. The sending module 42 is further configured to send second configuration information to the fourth bearer establishment apparatus based on the seventh message received by the receiving module 41, where the second configuration information is used for at least one of the following: releasing the second DRB and establishing the first DRB; and modifying the configuration parameter corresponding to the first DRB; where the first DRB with the configuration parameter modified is usable to transmit the service data of the second service.

In a possible implementation, the first bearer establishment apparatus is an access network device, and the second bearer establishment apparatus is an MME network element or an AMF network element.

In a possible implementation, the first service is a voice service, and the second service is a data service.

The first bearer establishment apparatus in the embodiment of this application may be an electronic device, for example, an electronic device having an operating system, or a component in an electronic device, for example, an integrated circuit or a chip. The electronic device may be a terminal or another device different from the terminal. For example, the terminal may include but is not limited to the types of the network device 12 listed above, and the another device may be a server, a network attached storage (Network Attached Storage, NAS), or the like, which is not specifically limited in the embodiments of this application.

The first bearer establishment apparatus according to the embodiments of this application can implement each process implemented by the method embodiments in FIGs. 4 to 8, with the same technical effects achieved. To avoid repetition, details are not described herein again.

The bearer establishment method according to the embodiments of this application may be executed by a second bearer establishment apparatus. In the embodiment of this application, a second bearer establishment apparatus executing the bearer establishment method is used as an example to describe a second bearer establishment apparatus according to an embodiment of this application.

FIG. 16 is a possible schematic structural diagram of a bearer establishment apparatus in an embodiment of this application, where the bearer establishment apparatus is a second bearer establishment apparatus. As shown in FIG. 16, the second bearer establishment apparatus 50 may include: a sending module 51.

The sending module 51 is configured to send a first message to a first bearer establishment apparatus, where the first message is used to establish a bearer for transmitting service data of a first service; and send an eighth message to a third bearer establishment apparatus, or send a ninth message to a fifth bearer establishment apparatus. The eighth message is used for any one of the following: releasing a resource corresponding to a first connection channel; and deleting a first connection channel; the first connection channel is used to transmit service data of a second service; and the ninth message is used to indicate that the first connection channel is unable to transmit the service data of the second service, and the first connection channel is used to transmit the service data of the second service.

The embodiment of this application provides a bearer establishment apparatus, where the bearer establishment apparatus is a second bearer establishment apparatus. When the second bearer establishment apparatus indicates the first bearer establishment apparatus to establish a bearer for transmitting service data of the first service, a situation may arise where the first connection channel is unable to transmit the service data of the second service. In this case, the second bearer establishment apparatus can notify the third bearer establishment apparatus to release the resource corresponding to the first connection channel and/or delete the first connection channel, to prevent other bearer establishment apparatuses from using resources to transmit information through the first connection channel. Therefore, resources occupied for transmitting information through the first connection channel can be saved, to reduce the probability of a low rate for transmitting the service data of the first service with other devices caused by resource insufficiency. Alternatively, the second bearer establishment apparatus can notify the fifth bearer establishment apparatus that the first connection channel is unable to transmit the service data of the second service, so the fifth bearer establishment apparatus can transmit information through the first connection channel, without using resources. Therefore, resources occupied for transmitting information through the first connection channel can be saved, to reduce the probability of a low rate for transmitting the service data of the first service with other devices caused by resource insufficiency. This can improve the efficiency of the fourth bearer establishment apparatus in performing the first service with other devices, thereby improving the quality of communication between the fourth bearer establishment apparatus and other devices.

In a possible implementation, the sending module 51 is specifically configured to perform any one of the following: in a case that a second message is received from the first bearer establishment apparatus, sending the eighth message to the third bearer establishment apparatus based on the second message; and in a case that a tenth message is received from a fifth bearer establishment apparatus, sending the eighth message to the third bearer establishment apparatus based on the tenth message. The second message is used for any one of the following: releasing the resource corresponding to the first connection channel; and deleting the first connection channel; and the tenth message is used to establish a bearer for transmitting the service data of the first service.

In a possible implementation, the sending module 51 is further configured to send a fourth message to the first bearer establishment apparatus, where the fourth message is used to indicate any one of the following: releasing a connection between the first bearer establishment apparatus and the second bearer establishment apparatus 50; and releasing a second connection channel; where the second connection channel is used to transmit the service data of the first service.

In a possible implementation, the fourth message is used to indicate releasing a connection between the first bearer establishment apparatus and the second bearer establishment apparatus 50; and the second bearer establishment apparatus 50 according to the embodiment of this application further includes: a receiving module. The receiving module is configured to receive an eleventh message from the third bearer establishment apparatus, where the eleventh message is used to delete the second connection channel. The sending module 51 is specifically configured to send the fourth message to the first bearer establishment apparatus based on the eleventh message received by the receiving module.

In a possible implementation, the ninth message is used to indicate that a state of the first connection channel is a third state, where the third state is used to characterize that the first connection channel is unable to transmit the service data of the second service.

In a possible implementation, the sending module 51 is specifically configured for any one of the following: in a case that a fifth message is received from the first bearer establishment apparatus, sending the ninth message to the fifth bearer establishment apparatus based on the fifth message; in a case that a tenth message is received from the fifth bearer establishment apparatus, sending the ninth message to the fifth bearer establishment apparatus based on the tenth message; and in a case that a twelfth message is received from a fourth bearer establishment apparatus, sending the ninth message to the fifth bearer establishment apparatus based on the twelfth message; where the fifth message is used to indicate that the first connection channel is unable to transmit the service data of the second service; the tenth message is used to establish a bearer for transmitting the service data of the first service; and the twelfth message is used to indicate that the first connection channel is unable to transmit the service data of the second service.

In a possible implementation, the fifth message is used to indicate that a state of the first connection channel is a third state, where the third state is used to characterize that the first connection channel is unable to transmit the service data of the second service; and the twelfth message is used to indicate that the state of the first connection channel is the third state.

In a possible implementation, the sending module 51 is further configured to, after sending the ninth message to the fifth bearer establishment apparatus, send a thirteenth message to the fifth bearer establishment apparatus, where the thirteenth message is used to indicate that the first connection channel is able to transmit the service data of the second service.

In a possible implementation, the thirteenth message is used to indicate that a state of the first connection channel is a fourth state, where the fourth state is used to characterize that the first connection channel is able to transmit the service data of the second service.

In a possible implementation, the sending module 51 is specifically configured for any one of the following: in a case that a sixth message is received from the first bearer establishment apparatus, sending the thirteenth message to the fifth bearer establishment apparatus based on the sixth message; in a case that a fourteenth message is received from the fifth bearer establishment apparatus, sending the thirteenth message to the fifth bearer establishment apparatus based on the fourteenth message; and in a case that a fifteenth message is received from the fourth bearer establishment apparatus, sending the thirteenth message to the fifth bearer establishment apparatus based on the fifteenth message; where the sixth message is used to indicate that the first connection channel is able to transmit the service data of the second service; the fourteenth message is used to delete a second connection channel, where the second connection channel is used to transmit the service data of the second service; and the fifteenth message is used to indicate that the first connection channel is able to transmit the service data of the second service.

In a possible implementation, the sixth message is used to indicate that a state of the first connection channel is a fourth state, where the fourth state is used to characterize that the first connection channel is able to transmit the service data of the second service; and the fifteenth message is used to indicate that the state of the first connection channel is the fourth state.

In a possible implementation, the sending module 51 is further configured to send a seventh message to the first bearer establishment apparatus, where the seventh message is used to indicate deleting a second connection channel, and the second connection channel is used to transmit the service data of the second service. The seventh message is used to trigger sending of second configuration information to the fourth bearer establishment apparatus, and the second configuration information is used for at least one of the following: releasing a second DRB and establishing a first DRB; and modifying a configuration parameter corresponding to the first DRB; where the first DRB with the configuration parameter modified is usable to transmit the service data of the second service.

In a possible implementation, the first bearer establishment apparatus is an access network device, and the second bearer establishment apparatus 50 is an MME network element or an AMF network element.

In a possible implementation, the first service is a voice service, and the second service is a data service.

The second bearer establishment apparatus in the embodiment of this application may be an electronic device, for example, an electronic device having an operating system, or a component in an electronic device, for example, an integrated circuit or a chip. The electronic device may be a terminal or another device different from the terminal. For example, the terminal may include but is not limited to the types of the network device 12 listed above, and the another device may be a server, a network attached storage (Network Attached Storage, NAS), or the like, which is not specifically limited in the embodiments of this application.

The second bearer establishment apparatus according to the embodiments of this application can implement each process implemented by the method embodiment in FIG. 9, with the same technical effects achieved. To avoid repetition, details are not described herein again.

The bearer establishment method according to the embodiments of this application may be executed by a fourth bearer establishment apparatus. In the embodiments of this application, a fourth bearer establishment apparatus executing the bearer establishment method is used as an example to describe a fourth bearer establishment apparatus according to an embodiment of this application.

FIG. 17 is a possible schematic structural diagram of a bearer establishment apparatus in an embodiment of this application, where the bearer establishment apparatus is a fourth bearer establishment apparatus. As shown in FIG. 17, the fourth bearer establishment apparatus 60 may include: a receiving module 61 and an execution module 62.

The receiving module 61 is configured to receive first configuration information from a first bearer establishment apparatus. The execution module 62 is configured to perform, based on the first configuration information received by the receiving module 61, at least one of the following: releasing a first DRB between the first bearer establishment apparatus and the fourth bearer establishment apparatus 60, and establishing a second DRB between the first bearer establishment apparatus and the fourth bearer establishment apparatus 60; and modifying a configuration parameter corresponding to the first DRB between the first bearer establishment apparatus and the fourth bearer establishment apparatus 60. The first DRB is used to transmit service data of a second service, the second DRB is used to transmit the service data of the first service, and the first DRB with the configuration parameter modified is usable to transmit the service data of the first service.

The embodiment of this application provides a bearer establishment apparatus, where the bearer establishment apparatus is a fourth bearer establishment apparatus. In a case that the first configuration information is received, the fourth bearer establishment apparatus can release the first DRB already established between the fourth bearer establishment apparatus and the first bearer establishment apparatus, and establish a second DRB. That is, the fourth bearer establishment apparatus can first reduce the number of DRBs already established between the fourth bearer establishment apparatus and the first bearer establishment apparatus, and then establish the second DRB. In other words, the fourth bearer establishment apparatus can establish the second DRB while ensuring that the number of DRBs already established between the fourth bearer establishment apparatus and the first bearer establishment apparatus does not reach the upper limit, instead of directly establishing a new DRB for transmitting the service data of the first service. Therefore, it is possible to avoid a situation where the fourth bearer establishment apparatus cannot establish the second DRB anymore due to the number of DRBs already established between the fourth bearer establishment apparatus and the first bearer establishment apparatus having reached the upper limit. And/or, in a case that the first configuration information is received, the fourth bearer establishment apparatus can modify a configuration parameter corresponding to the first DRB already established between the fourth bearer establishment apparatus and the first bearer establishment apparatus, to obtain a DRB for transmitting the service data of the first service. That is, instead of directly establishing a new DRB for transmitting the service data of the first service, the fourth bearer establishment apparatus can obtain, through modification, a DRB for transmitting the service data of the first service, without increasing the number of DRBs already established between the fourth bearer establishment apparatus and the first bearer establishment apparatus. Therefore, it is possible to avoid a situation where the fourth bearer establishment apparatus cannot establish the second DRB anymore due to the number of DRBs already established between the fourth bearer establishment apparatus and the first bearer establishment apparatus having reached the upper limit. This can reduce the probability that the fourth bearer establishment apparatus is unable to perform communication services with other devices, thereby improving the quality of communication between the fourth bearer establishment apparatus and other devices.

In a possible implementation, the receiving module 61 is further configured to receive a third message from the first bearer establishment apparatus. The execution module 62 is further used to release an RRC connection between the fourth bearer establishment apparatus 60 and the first bearer establishment apparatus based on the third message received by the receiving module 61.

In a possible implementation, the execution module 62 is further configured to, upon completing release of an RRC connection between the fourth bearer establishment apparatus 60 and the first bearer establishment apparatus, establish an RRC connection between the fourth bearer establishment apparatus 60 and the first bearer establishment apparatus based on a sixteenth message. The sixteenth message includes at least one of the following: a service request message, a location update message, and a registration message.

In a possible implementation, the fourth bearer establishment apparatus 60 according to the embodiment of this application further includes: a sending module. The sending module is configured to send a twelfth message to a second bearer establishment apparatus, where the twelfth message is used to indicate that a first connection channel is unable to transmit the service data of the second service.

In a possible implementation, the twelfth message is used to indicate that a state of the first connection channel is a third state, where the third state is used to characterize that the first connection channel is unable to transmit the service data of the second service.

In a possible implementation, the receiving module 61 is further configured to receive second configuration information from the first bearer establishment apparatus. The execution module 62 is further configured to perform, based on the second configuration information received by the receiving module 61, at least one of the following: releasing the second DRB and establishing the first DRB; and modifying the configuration parameter corresponding to the first DRB; where the first DRB with the configuration parameter modified is usable to transmit the service data of the second service.

In a possible implementation, the fourth bearer establishment apparatus 60 according to the embodiment of this application further includes: a sending module. The sending module is configured to, after the receiving module 61 receives the second configuration information from the first bearer establishment apparatus, send a fifteenth message to a second bearer establishment apparatus, where the fifteenth message is used to indicate that a first connection channel is able to transmit the service data of the second service.

In a possible implementation, the fifteenth message is used to indicate that a state of the first connection channel is a fourth state, where the fourth state is used to characterize that the first connection channel is able to transmit the service data of the second service.

In a possible implementation, the first network device is an access network device, and the second network device is an MME network element or an AMF network element.

In a possible implementation, the first service is a voice service, and the second service is a data service.

The fourth bearer establishment apparatus in the embodiment of this application may be an electronic device, for example, an electronic device having an operating system, or a component in an electronic device, for example, an integrated circuit or a chip. The electronic device may be a terminal or another device different from the terminal. For example, the terminal may include but is not limited to the types of the terminal 11 listed above, and the another device may be a server, a network attached storage (Network Attached Storage, NAS), or the like, which is not specifically limited in the embodiments of this application.

The fourth bearer establishment apparatus according to the embodiment of this application can implement each process implemented by the method embodiment in FIG. 10, with the same technical effects achieved. To avoid repetition, details are not described herein again.

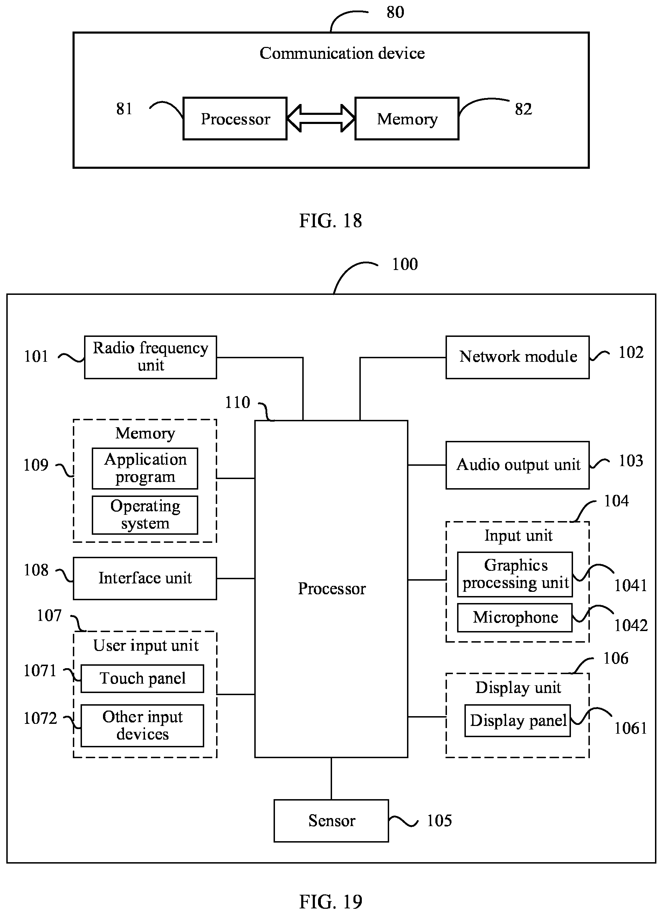

As shown in FIG. 18, an embodiment of this application further provides a communication device 80 including a processor 81 and a memory 82. The memory 82 stores a program or instructions capable of running on the processor 81. For example, in a case that the communication device 80 is a terminal, when the program or instructions are executed by the processor 81, each step of the corresponding bearer establishment method embodiment on the terminal side is implemented, with the same technical effects achieved. In a case that the communication device 80 is a network device, when the program or instructions are executed by the processor 81, each step of the corresponding method embodiment on the first network device side or the second network device side is implemented, with the same technical effects achieved. To avoid repetition, details are not described herein again.

An embodiment of this application further provides a terminal including a processor and a communication interface, where the communication interface is coupled to the processor, and the processor is configured to run a program or instructions to implement the steps in the method embodiment shown in FIG. 10. This terminal embodiment corresponds to the foregoing terminal-side method embodiment, and each implementation process and implementation of the foregoing method embodiment can be applied to this terminal embodiment, with the same technical effects achieved. Specifically, FIG. 19 is a schematic diagram of a hardware structure of a terminal implementing an embodiment of this application.

The terminal 100 includes but is not limited to: at least some components of a radio frequency unit 101, a network module 102, an audio output unit 103, an input unit 104, a sensor 105, a display unit 106, a user input unit 107, an interface unit 108, a memory 109, a processor 110, and the like.

Those skilled in the art can understand that the terminal 100 may further include a power supply (such as a battery) supplying power to components, and the power supply may be logically connected to the processor 110 through a power management system, so as to implement functions such as charging management, discharging management, and power consumption management through the power management system. The structure of the terminal shown in FIG. 19 does not constitute any limitation on the terminal. The terminal may include more or fewer components than shown in the figure, or a combination of some components, or the components disposed differently. Details are not described herein.

It should be understood that in the embodiments of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function key (such as a volume control key or an on/off key), a trackball, a mouse, and a joystick. Details are not described herein.

In the embodiment of this application, after receiving downlink data from the network device, the radio frequency unit 101 can transmit the downlink data to the processor 110 for processing. In addition, the radio frequency unit 101 can send uplink data to the network device. Generally, the radio frequency unit 101 includes but is not limited to an antenna, an amplifier, a transceiver, a coupler, a low noise amplifier, and a duplexer.

The memory 109 may be configured to store a software program or instructions and various data. The memory 109 may mainly include a first storage area for storing programs or instructions and a second storage area for storing data. The first storage area may store an operating system, an application program or instructions required by at least one function (for example, a sound play function or an image play function), and the like. In addition, the memory 109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 109 in the embodiments of this application includes but is not limited to these and any other suitable types of memories.

The processor 110 may include one or more processing units. Optionally, the processor 110 integrates an application processor and a modem processor. The application processor mainly processes operations related to an operating system, a user interface, an application program, and the like. The modem processor, such as a baseband processor, mainly processes wireless communication signals. It can be understood that the modem processor may alternatively be not integrated into the processor 110.

The radio frequency unit 101 is configured to receive first configuration information from a first network device.

The processor 110 is configured to perform, based on the first configuration information, at least one of the following:
releasing a first DRB between the terminal and the first network device, and establishing a second DRB between the terminal and the first network device; and
modifying a configuration parameter corresponding to the first DRB between the terminal and the first network device.

The first DRB is used to transmit service data of a second service, the second DRB is used to transmit the service data of the first service, and the first DRB with the configuration parameter modified is usable to transmit the service data of the first service.

The embodiment of this application provides a terminal. In a case that the first configuration information is received, the terminal can release the first DRB already established between the terminal and the first network device, and establish a second DRB. That is, the terminal can first reduce the number of DRBs already established between the terminal and the first network device, and then establish the second DRB. In other words, the terminal can establish the second DRB while ensuring that the number of DRBs already established between the terminal and the first network device does not reach the upper limit, instead of directly establishing a new DRB for transmitting the service data of the first service. Therefore, it is possible to avoid a situation where the terminal cannot establish the second DRB anymore due to the number of DRBs already established between the terminal and the first network device having reached the upper limit. And/or, in a case that the first configuration information is received, the terminal can modify a configuration parameter corresponding to the first DRB already established between the terminal and the first network device, to obtain a DRB for transmitting the service data of the first service. That is, instead of directly establishing a new DRB for transmitting the service data of the first service, the terminal can obtain, through modification, a DRB for transmitting the service data of the first service, without increasing the number of DRBs already established between the terminal and the first network device. Therefore, it is possible to avoid a situation where the terminal cannot establish the second DRB anymore due to the number of DRBs already established between the terminal and the first network device having reached the upper limit. This can reduce the probability that the terminal is unable to perform communication services with other devices, thereby improving the quality of communication between the terminal and other devices.

In some embodiments of this application, the radio frequency unit 101 is further configured to receive a third message from the first network device.

The processor 110 is further configured to release an RRC connection between the terminal and the first network device based on the third message.

In some embodiments of this application, the processor 110 is further configured to, upon completing release of an RRC connection between the terminal and the first network device, establish an RRC connection between the terminal and the first network device based on a sixteenth message.

The sixteenth message includes at least one of the following: a service request message, a location update message, and a registration message.

In some embodiments of this application, the radio frequency unit 101 is further configured to send a twelfth message to a second network device, where the twelfth message is used to indicate that a first connection channel is unable to transmit the service data of the second service.

In some embodiments of this application, the radio frequency unit 101 is further configured to receive second configuration information from the first network device.

The processor 110 is further configured to perform, based on the second configuration information, at least one of the following:
releasing the second DRB and establishing the first DRB; and
modifying the configuration parameter corresponding to the first DRB.

The first DRB with the configuration parameter modified is usable to transmit the service data of the second service.

In some embodiments of this application, the radio frequency unit 101 is further configured to send a fifteenth message to a second network device, where the fifteenth message is used to indicate that a first connection channel is able to transmit the service data of the second service.

It can be understood that for the implementation processes of the implementations mentioned in this embodiment, reference may be made to the relevant descriptions of the corresponding bearer establishment method on the terminal side in the method embodiments, and the same or corresponding technical effects are achieved. To avoid repetition, details are not described herein again.

An embodiment of this application further provides a network device including a processor and a communication interface, where the communication interface is coupled to the processor, and the processor is configured to run a program or instructions to implement the steps in the method embodiment shown in FIG. 9 or FIG. 10. This network device embodiment corresponds to the foregoing network device method embodiment, and each implementation process and implementation of the foregoing method embodiment can be applied to this network device embodiment, with the same technical effects achieved.

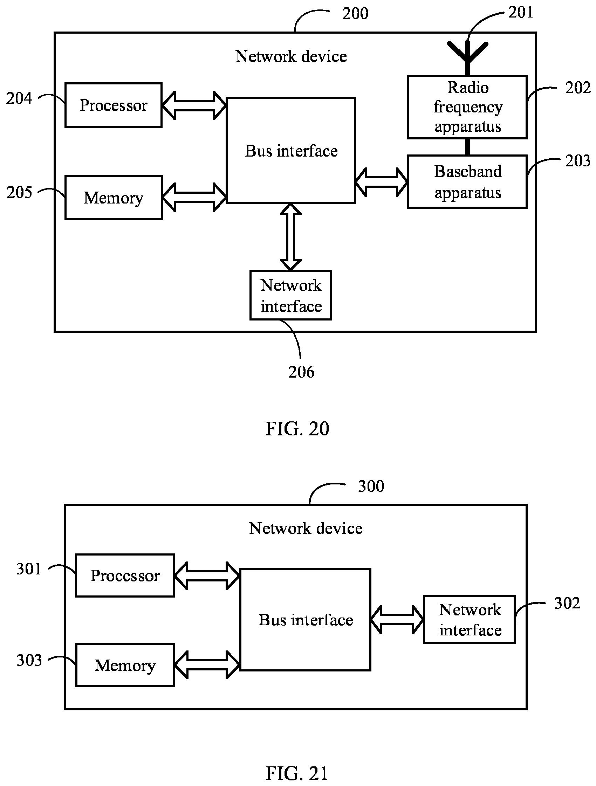

Specifically, an embodiment of this application further provides a network device. As shown in FIG. 20, the network device 200 includes: an antenna 201, a radio frequency apparatus 202, a baseband apparatus 203, a processor 204, and a memory 205. The antenna 201 is connected to the radio frequency apparatus 202. In an uplink direction, the radio frequency apparatus 202 receives information via the antenna 201, and sends the received information to the baseband apparatus 203 for processing. In a downlink direction, the baseband apparatus 203 processes to-be-sent information, and sends the information to the radio frequency apparatus 202; and the radio frequency apparatus 202 processes the received information and then sends the information out via the antenna 201.

The method executed by the network device in the foregoing embodiments can be implemented in the baseband apparatus 203, and the baseband apparatus 203 includes a baseband processor.

The baseband apparatus 203 may include, for example, at least one baseband board, where multiple chips are disposed on the baseband board. As shown in FIG. 20, one of the chips is, for example, the baseband processor, and connected to the memory 205 via a bus interface, to invoke the program in the memory 205 to perform the operations of the network device shown in the foregoing method embodiments.

The network device may further include a network interface 206. The interface is, for example, a common public radio interface (Common Public Radio Interface, CPRI).

Specifically, the network device 200 of the embodiment of this application further includes: instructions or a program stored on the memory 205 and capable of running on the processor 204, and the processor 204 invokes the instructions or program in the memory 205 to execute the method performed by the modules shown in FIG. 15 or FIG. 16, with the same technical effects achieved. To avoid repetition, details are not described herein again.

Specifically, an embodiment of this application further provides a network device. As shown in FIG. 21, the network device 300 includes: a processor 301, a network interface 302, and a memory 303. The network interface 302 is, for example, a common public radio interface (common public radio interface, CPRI).

Specifically, the network device 300 according to the embodiment of this application further includes: instructions or a program stored on the memory 303 and capable of running on the processor 301, and the processor 301 invokes the instructions or program in the memory 303 to execute the method performed by the modules shown in FIG. 15 or FIG. 16, with the same technical effects achieved. To avoid repetition, details are not described herein again.

An embodiment of this application further provides a readable storage medium, where the readable storage medium stores a program or instructions, and when the program or instructions are executed by a processor, each process of the foregoing bearer establishment method embodiments is implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or a compact disc. In some examples, the readable storage medium may be a non-transitory readable storage medium.

An embodiment of this application further provides a chip, where the chip includes a processor and a communication interface, the communication interface is coupled to the processor, and the processor is configured to run a program or instructions to implement each process of the bearer establishment method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement each process of the bearer establishment method embodiments, with the same technical effects achieved. To avoid repetition, details are not described herein again.

An embodiment of this application further provides a wireless communication system including: a terminal and a network device, where the terminal may be configured to perform the steps of the corresponding bearer establishment method on the terminal side described above; and the network device may be configured to perform the steps of the corresponding bearer establishment method on the first network device side or the second network device side described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by a computer software product with a necessary general hardware platform. Certainly, the method in the foregoing embodiments may also be implemented by hardware. The computer software product is stored in a storage medium (such as a ROM, a RAM, a magnetic disk, or a compact disc), and includes several instructions for instructing a terminal or a network device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementations without departing from principles of this application and the protection scope of the claims, and all such implementations fall within the protection scope of this application.

## Claims

1. A bearer establishment method, comprising:
receiving, by a first network device, a first message from a second network device, wherein the first message is used to establish a bearer for transmitting service data of a first service; and
sending, by the first network device, first configuration information to a terminal based on the first message, wherein the first configuration information is used for at least one of the following:
releasing a first DRB between the terminal and the first network device, and establishing a second DRB between the terminal and the first network device; and
modifying a configuration parameter corresponding to the first DRB between the terminal and the first network device; wherein
the first DRB is used to transmit service data of a second service, the second DRB is used to transmit the service data of the first service, and the first DRB with the configuration parameter modified is usable to transmit the service data of the first service.

2. The method according to claim 1, wherein the method further comprises:
sending, by the first network device, a second message to the second network device, wherein the second message is used for any one of the following:
releasing a resource corresponding to a first connection channel; and
deleting a first connection channel; wherein
the first connection channel is used to transmit the service data of the second service.

3. The method according to claim 1, wherein the method further comprises:
sending, by the first network device, a third message to the terminal, wherein the third message is used to release a radio resource control RRC connection between the terminal and the first network device.

4. The method according to claim 3, wherein the method further comprises:
receiving, by the first network device, a fourth message from the second network device; and
the sending, by the first network device, a third message to the terminal comprises:
sending, by the first network device, the third message to the terminal based on the fourth message; wherein
the fourth message is used to indicate any one of the following:
releasing a connection between the first network device and the second network device; and
releasing a second connection channel; wherein
the second connection channel is used to transmit the service data of the first service.

5. The method according to claim 1, wherein the method further comprises:
in a case that the first network device receives service data through a first connection channel, discarding, by the first network device, the received service data, wherein the first connection channel is used to transmit the service data of the second service.

6. The method according to claim 5, wherein the method further comprises:
marking, by the first network device, a state of the first connection channel as a first state, wherein the first state is used to characterize that the first connection channel is unable to transmit the service data of the second service.

7. The method according to claim 6, wherein after the marking, by the first network device, a state of the first connection channel as a first state, the method further comprises:
marking, by the first network device, the state of the first connection channel as a second state, wherein the second state is used to characterize that the first connection channel is able to transmit the service data of the second service.

8. The method according to claim 1, wherein the method further comprises:
sending, by the first network device, a fifth message to the second network device, wherein the fifth message is used to indicate that a first connection channel is unable to transmit the service data of the second service; wherein
the first connection channel is used to transmit the service data of the second service.

9. The method according to claim 8, wherein the fifth message is used to indicate that a state of the first connection channel is a third state, wherein the third state is used to characterize that the first connection channel is unable to transmit the service data of the second service.

10. The method according to claim 8, wherein after the sending, by the first network device, a fifth message to the second network device, the method further comprises:
sending, by the first network device, a sixth message to the second network device, wherein the sixth message is used to indicate that the first connection channel is able to transmit the service data of the second service.

11. The method according to claim 10, wherein the sixth message is used to indicate that a state of the first connection channel is a fourth state, wherein the fourth state is used to characterize that the first connection channel is able to transmit the service data of the second service.

12. The method according to any one of claims 5 to 11, wherein the method further comprises:
receiving, by the first network device, a seventh message from the second network device, wherein the seventh message is used to indicate deleting a second connection channel, and the second connection channel is used to transmit the service data of the second service; and
sending, by the first network device, second configuration information to the terminal based on the seventh message, wherein the second configuration information is used for at least one of the following:
releasing the second DRB and establishing the first DRB; and
modifying the configuration parameter corresponding to the first DRB; wherein
the first DRB with the configuration parameter modified is usable to transmit the service data of the second service.

13. The method according to any one of claims 1 to 12, wherein the first network device is an access network device, and the second network device is a mobility management entity MME network element or an access and mobility management function AMF network element.

14. The method according to any one of claims 1 to 13, wherein the first service is a voice service, and the second service is a data service.

15. A bearer establishment method, comprising:
sending, by a second network device, a first message to a first network device, wherein the first message is used to establish a bearer for transmitting service data of a first service; and
sending, by the second network device, an eighth message to a third network device, or sending, by the second network device, a ninth message to a fourth network device; wherein
the eighth message is used for any one of the following:
releasing a resource corresponding to a first connection channel; and
deleting a first connection channel; wherein
the first connection channel is used to transmit service data of a second service; and
the ninth message is used to indicate that the first connection channel is unable to transmit the service data of the second service, and the first connection channel is used to transmit the service data of the second service.

16. The method according to claim 15, wherein the sending, by the second network device, an eighth message to a third network device comprises any one of the following:
in a case that a second message is received from the first network device, sending, by the second network device, the eighth message to the third network device based on the second message; and
in a case that a tenth message is received from a fourth network device, sending, by the second network device, the eighth message to the third network device based on the tenth message; wherein
the second message is used for any one of the following:
releasing the resource corresponding to the first connection channel; and
deleting the first connection channel; and
the tenth message is used to establish a bearer for transmitting the service data of the first service.

17. The method according to claim 15, wherein the method further comprises:
sending, by the second network device, a fourth message to the first network device, wherein the fourth message is used to indicate any one of the following:
releasing a connection between the first network device and the second network device; and
releasing a second connection channel; wherein
the second connection channel is used to transmit the service data of the first service.

18. The method according to claim 17, wherein the fourth message is used to indicate releasing a connection between the first network device and the second network device; the method further comprises:
receiving, by the second network device, an eleventh message from a third network device, wherein the eleventh message is used to delete the second connection channel; and
the sending, by the second network device, a fourth message to the first network device comprises:
sending, by the second network device, the fourth message to the first network device based on the eleventh message.

19. The method according to claim 15, wherein the ninth message is used to indicate that a state of the first connection channel is a third state, wherein the third state is used to characterize that the first connection channel is unable to transmit the service data of the second service.

20. The method according to claim 15, wherein the sending, by the second network device, a ninth message to a fourth network device comprises any one of the following:
in a case that a fifth message is received from the first network device, sending, by the second network device, the ninth message to the fourth network device based on the fifth message;
in a case that a tenth message is received from the fourth network device, sending, by the second network device, the ninth message to the fourth network device based on the tenth message; and
in a case that a twelfth message is received from a terminal, sending, by the second network device, the ninth message to the fourth network device based on the twelfth message; wherein
the fifth message is used to indicate that the first connection channel is unable to transmit the service data of the second service; the tenth message is used to establish a bearer for transmitting the service data of the first service; and the twelfth message is used to indicate that the first connection channel is unable to transmit the service data of the second service.

21. The method according to claim 20, wherein the fifth message is used to indicate that a state of the first connection channel is a third state, wherein the third state is used to characterize that the first connection channel is unable to transmit the service data of the second service; and
the twelfth message is used to indicate that the state of the first connection channel is the third state.

22. The method according to claim 15, wherein after the sending, by the second network device, a ninth message to a fourth network device, the method further comprises:
sending, by the second network device, a thirteenth message to the fourth network device, wherein the thirteenth message is used to indicate that the first connection channel is able to transmit the service data of the second service.

23. The method according to claim 22, wherein the thirteenth message is used to indicate that a state of the first connection channel is a fourth state, wherein the fourth state is used to characterize that the first connection channel is able to transmit the service data of the second service.

24. The method according to claim 22, wherein the sending, by the second network device, a thirteenth message to the fourth network device comprises any one of the following:
in a case that a sixth message is received from the first network device, sending, by the second network device, the thirteenth message to the fourth network device based on the sixth message;
in a case that a fourteenth message is received from the fourth network device, sending, by the second network device, the thirteenth message to the fourth network device based on the fourteenth message; and
in a case that a fifteenth message is received from a terminal, sending, by the second network device, the thirteenth message to the fourth network device based on the fifteenth message; wherein
the sixth message is used to indicate that the first connection channel is able to transmit the service data of the second service; the fourteenth message is used to delete a second connection channel, wherein the second connection channel is used to transmit the service data of the second service; and the fifteenth message is used to indicate that the first connection channel is able to transmit the service data of the second service.

25. The method according to claim 24, wherein the sixth message is used to indicate that a state of the first connection channel is a fourth state, wherein the fourth state is used to characterize that the first connection channel is able to transmit the service data of the second service; and
the fifteenth message is used to indicate that the state of the first connection channel is the fourth state.

26. The method according to any one of claims 15 to 25, wherein the method further comprises:
sending, by the second network device, a seventh message to the first network device, wherein the seventh message is used to indicate deleting a second connection channel, and the second connection channel is used to transmit the service data of the second service; wherein
the seventh message is used to trigger sending of second configuration information to the terminal, and the second configuration information is used for at least one of the following:
releasing a second DRB and establishing a first DRB; and
modifying a configuration parameter corresponding to the first DRB; wherein
the first DRB with the configuration parameter modified is usable to transmit the service data of the second service.

27. The method according to any one of claims 15 to 26, wherein the first network device is an access network device, and the second network device is an MME network element or an AMF network element.

28. The method according to any one of claims 15 to 27, wherein the first service is a voice service, and the second service is a data service.

29. A bearer establishment method, comprising:
receiving, by a terminal, first configuration information from a first network device; and
performing, by the terminal based on the first configuration information, at least one of the following:
releasing a first DRB between the terminal and the first network device, and establishing a second DRB between the terminal and the first network device; and
modifying a configuration parameter corresponding to the first DRB between the terminal and the first network device; wherein
the first DRB is used to transmit service data of a second service, the second DRB is used to transmit service data of a first service, and the first DRB with the configuration parameter modified is usable to transmit the service data of the first service.

30. The method according to claim 29, wherein the method further comprises:
receiving, by the terminal, a third message from the first network device; and
releasing, by the terminal, an RRC connection between the terminal and the first network device based on the third message.

31. The method according to claim 29, wherein the method further comprises:
upon completing release of an RRC connection between the terminal and the first network device, establishing, by the terminal, an RRC connection between the terminal and the first network device based on a sixteenth message; wherein
the sixteenth message comprises at least one of the following: a service request message, a location update message, and a registration message.

32. The method according to claim 29, wherein the method further comprises:
sending, by the terminal, a twelfth message to a second network device, wherein the twelfth message is used to indicate that a first connection channel is unable to transmit the service data of the second service.

33. The method according to claim 32, wherein the twelfth message is used to indicate that a state of the first connection channel is a third state, wherein the third state is used to characterize that the first connection channel is unable to transmit the service data of the second service.

34. The method according to claim 29, wherein the method further comprises:
receiving, by the terminal, second configuration information from the first network device; and
performing, by the terminal based on the second configuration information, at least one of the following:
releasing the second DRB and establishing the first DRB; and
modifying the configuration parameter corresponding to the first DRB; wherein
the first DRB with the configuration parameter modified is usable to transmit the service data of the second service.

35. The method according to claim 34, wherein after the receiving, by the terminal, second configuration information from the first network device, the method further comprises:
sending, by the terminal, a fifteenth message to a second network device, wherein the fifteenth message is used to indicate that a first connection channel is able to transmit the service data of the second service.

36. The method according to claim 35, wherein the fifteenth message is used to indicate that a state of the first connection channel is a fourth state, wherein the fourth state is used to characterize that the first connection channel is able to transmit the service data of the second service.

37. The method according to claim 32 or 35, wherein the first network device is an access network device, and the second network device is an MME network element or an AMF network element.

38. The method according to any one of claims 29 to 37, wherein the first service is a voice service, and the second service is a data service.

39. A bearer establishment apparatus, wherein the bearer establishment apparatus is a first bearer establishment apparatus, and the first bearer establishment apparatus comprises: a receiving module and a sending module; wherein
the receiving module is configured to receive a first message from a second bearer establishment apparatus, wherein the first message is used to establish a bearer for transmitting service data of a first service; and
the sending module is configured to send first configuration information to a fourth bearer establishment apparatus based on the first message received by the receiving module, wherein the first configuration information is used for at least one of the following:
releasing a first DRB between the first bearer establishment apparatus and the fourth bearer establishment apparatus, and establishing a second DRB between the first bearer establishment apparatus and the fourth bearer establishment apparatus; and
modifying a configuration parameter corresponding to the first DRB between the first bearer establishment apparatus and the fourth bearer establishment apparatus; wherein
the first DRB is used to transmit service data of a second service, the second DRB is used to transmit the service data of the first service, and the first DRB with the configuration parameter modified is usable to transmit the service data of the first service.

40. A bearer establishment apparatus, wherein the bearer establishment apparatus is a second bearer establishment apparatus, and the second bearer establishment apparatus comprises: a sending module; wherein
the sending module is configured to send a first message to a first bearer establishment apparatus, wherein the first message is used to establish a bearer for transmitting service data of a first service; and send an eighth message to a third bearer establishment apparatus, or send a ninth message to a fifth bearer establishment apparatus; wherein
the eighth message is used for any one of the following:
releasing a resource corresponding to a first connection channel; and
deleting a first connection channel;
the first connection channel is used to transmit service data of a second service; and
the ninth message is used to indicate that the first connection channel is unable to transmit the service data of the second service, and the first connection channel is used to transmit the service data of the second service.

41. A bearer establishment apparatus, wherein the bearer establishment apparatus is a fourth bearer establishment apparatus, and the fourth bearer establishment apparatus comprises: a receiving module and an execution module; wherein
the receiving module is configured to receive first configuration information from a first bearer establishment apparatus; and
the execution module is configured to perform, based on the first configuration information received by the receiving module, at least one of the following:
releasing a first DRB between the first bearer establishment apparatus and the fourth bearer establishment apparatus, and establishing a second DRB between the first bearer establishment apparatus and the fourth bearer establishment apparatus; and
modifying a configuration parameter corresponding to the first DRB between the first bearer establishment apparatus and the fourth bearer establishment apparatus; wherein
the first DRB is used to transmit service data of a second service, the second DRB is used to transmit service data of a first service, and the first DRB with the configuration parameter modified is usable to transmit the service data of the first service.

42. A network device, comprising a processor and a memory, wherein the memory stores a program or instructions capable of running on the processor, and the program or instructions, when executed by the processor, implement the steps of the bearer establishment method according to any one of claims 1 to 28.

43. A terminal, comprising a processor and a memory, wherein the memory stores a program or instructions capable of running on the processor, and the program or instructions, when executed by the processor, implement the steps of the bearer establishment method according to any one of claims 29 to 38.

44. A readable storage medium, wherein the readable storage medium stores a program or instructions, and the program or instructions, when executed by a processor, implement the bearer establishment method according to any one of claims 1 to 28, or implement the steps of the bearer establishment method according to any one of claims 29 to 38.
